(19) Europäisches Patentamt
European Patent Office
Office européen des brevets

(11) EP 1 586 378 A2

(12) EUROPEAN PATENT APPLICATION

(43) Date of publication:
**19.10.2005 Bulletin 2005/42**

(51) Int Cl.[7]: **B01L 3/00**

(21) Application number: **05008166.0**

(22) Date of filing: **14.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **16.04.2004 JP 2004121908**

(71) Applicant: **MATSUSHITA ELECTRIC INDUSTRIAL CO., LTD.**
**Kadoma-shi, Osaka 571-8501 (JP)**

(72) Inventor: **Mino, Norihisa**
**Osaka-shi Osaka (JP)**

(74) Representative: **TBK-Patent**
**Bavariaring 4-6**
**80336 München (DE)**

(54) **Sample-analyzing device and process for manufacturing the same**

(57) Sample-analyzing device 100 has a substrate 1 having a sample-loading face F1 having two or more dents 3 each formed for independently storing two or more droplets containing an analyte. The sample-loading face F1 is divided at least into a first area F11 coated with a hydrophobic organic molecular film 2 and two or more second areas F12 of which the inside is not coated with the organic molecular film 2 and the entire peripheral area is surrounded by the first area. Each of the bottom face of the dents 3 constitutes the second area F12 and each of the peripheral area of the dents 3 including its internal side surface is formed with the organic molecular film 2 coating the first area. The organic molecular film 2 is formed by using an organic molecule and bound to the face F1 via covalent bonds.

FIG. 1

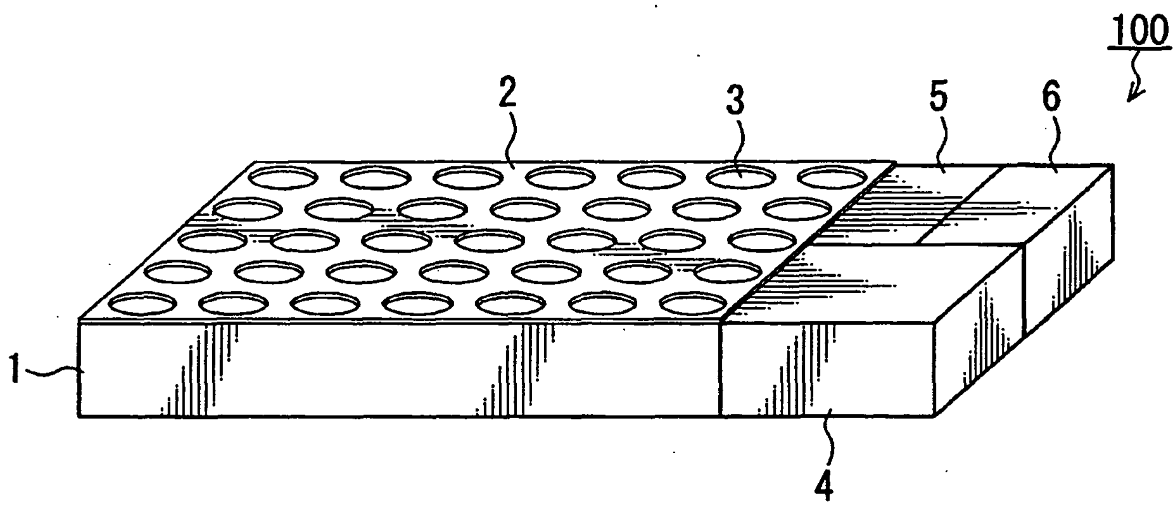


EP 1 586 378 A2

## Description

BACKGROUND OF THE INVENTION

FIELD OF THE INVENTION

The present invention relates to a sample-analyzing device that analyzes by detecting a light-emitting reaction occurring in droplets containing an analyte such as particular gene or protein and the process of manufacturing the same.

BACKGROUND ART

Recently, many new tools for gene analysis such as DNA chips and microarrays (hereinafter, referred to as "DNA chips") have been commercialized and used widely for diagnosis and prevention of diseases, drug discovery, and others. Such DNA chips include those having a glass substrate whereon numerous DNA probes are immobilized at high density by spotting droplets of the DNA solutions containing corresponding DNA probes with a known gene sequence onto the face for storing the sample droplets (hereinafter, referred to as needed as "sample-loading face"), and those having a glass substrate with immobilized DNA probes of which the DNAs are synthesized thereon (on the sample-loading face of a glass substrate), and the like.

In regard to these DNA chips, there exist needs for simultaneous analysis of a large number of multiple samples (different in kind and composition) and a large number of items and simultaneous analysis of a large number of a single sample (identical in kind and composition). In addition, there are also needs for improvement in analytical efficiency, reduction in analysis cost, and miniaturization of analyzers for the DNA chips. For that reason, various studies have been conducted for miniaturization of analyzers and further increase in the density of the reaction fields on a sample-loading face (droplet of sample solution).

DNA chips examine whether a desirable gene is expressed or not, for example, by applying a complementary DNA (cDNA) prepared by reverse-transcription of the mRNA collected from a sample to the analysis unit containing an immobilized DNA probe and detecting the resulting hybridization between the cDNA and the DNA probe on the substrate. Such DNA chips allow effective analysis, for example, of a smaller amount of sample. In addition, DNA chips having various kinds of DNA probes immobilized on a single substrate allow multi-item analysis of the same sample only on a single DNA chip.

Fluorescence and other labels are generally used for detection of the hybridization or the like described above. For example, an analyte gene is labeled during amplification by the PCR (polymerase chain reaction) method by addition of a fluorescence substance. In this manner, it becomes possible to detect the hybridization between the labeled amplified product and the immobilized DNA probe by the fluorescence emitted from the hybridized product.

CCDs (charge-coupled devices) are generally used as the means of detecting the emitted light (or coloring), in order for detecting the emission state (or coloring state) on the DNA chip in a two-dimensional map and thus for obtaining information as much as possible at the same time. In conventional detectors having a CCD as the emission detection means, the CCD is placed in the dark room inside the detectors. A DNA microchip after the hybridization between an analyte gene and an immobilized probe is placed inside the detector and the light emission is detected there during analysis (e.g., Prior Art 1: Tadashi Matunaga (Ed.), Genome Engineering Research Society, "DNA Chip Application Technology", CMC Publishing, July 31, 2000, p.45 to 49)

A fluorescence detector having a photodiode as the emission detection means and a fluorescence reaction cell, i.e., a reaction field for the fluorescence reaction, on the photodiode was proposed for improvement in detection sensitivity (e.g., Prior Art 2: Japanese Unexamined Patent Publication No. 2002-350346).

Also proposed is a reaction field array having a configuration wherein convex matrix pattern noncompatible with liquids that is made of metal or plastic polymer is formed on the substrate so that test samples placed on the substrate (the sample-loading face of substrate) are separated from neighboring reaction fields. (e.g., Prior Art 3: Jpn. Unexamined Patent Publication No. 11-99000). The reaction field arrays are intended to prevent mixing (contamination) of neighboring reaction fields on the substrate, which is caused by diffusion of the droplets of sample solution thereon, even when the dents for the reaction fields (droplet of sample solution) on the substrate are miniaturized and placed densely on the substrate in a greater number.

Further, proposed as a device for conducting gene tests in the cheaper and simpler manner is a biological sample-analyzing system having a sample plate on which a plurality of reaction cells for storing biological samples are distributed one- or two-dimensionally, an optical sensor array substrate containing an optical sensor array in which the optical sensor for plurality of pixels are arranged one- or two-dimensional and a pixel-selecting circuit for selecting the pixels to be read, and a unit for positioning the sample plate and the optical sensor array substrate so that the reaction cell and the pixel above corresponds to each other in the vertical direction (Prior Art 4: Japanese Unexamined Patent

Publication No. 2003-329681). In the system, the light generated by the reaction between the biological sample above and the reagent in the reaction cell corresponding to the selected pixel above is detected by the optical sensor corresponding to the selected pixel and the signal from the selected pixel is read (e.g., Prior Art 4: Japanese Unexamined Patent Publication No. 2003-329681). The system is a system developed aiming at miniaturization, improvement in sensitivity, and reduction in cost for performing genetic tests in the cheaper and simpler manner.

However, in regard to conventional arts including those described above, there exist needs for further reduction in the amount of droplets ejected onto the sample-loading face of DNA chip and increase in the number of dents thereon. However, further miniaturization and increase in density of the reaction fields, further improvement in analytical efficiency, further reduction in analysis cost, and further miniaturization of analyzer often lead to deterioration in analytical accuracy, making it more difficult to achieve the goal.

More specifically, when the volume of the droplet of analytical sample (reaction field) is reduced to 1,000 pL or less and the density of the dents (reaction fields) storing the sample droplets (the number of droplets placed per unit area of the sample-loading face) is increased to 10,000 pieces/$cm^2$ or more, contamination between the droplets often occurs, leading to deterioration in analytical accuracy.

In particular, it was difficult to reduce the droplet volume preferably to 35 pL or less (more preferably 1.2 pL or less) and increase the density of reaction fields preferably to 100,000 pieces/$cm^2$ (more preferably 1,000,000 pieces/$cm^2$ or more). When miniaturization and increase in density of the reaction fields on the sample-loading face are pursued at a higher level, which was quite difficult in the past, it was extremely difficult to analyze at the same time various kinds and a great number of analytical samples in an extremely trace amount accurately and rapidly in a smaller analysis space.

For example, the DNA chip and detector described in Prior Art 1 has a sample-loading face of the DNA chip made of a hydrophilic material (e.g., glass or the like). As a result, it is not possible to prevent the diffusion of the ejected droplets on the sample-loading face sufficiently. Accordingly, when miniaturization and increase in density of the reaction fields on the sample-loading face are pursued at an extremely higher level as described above, it becomes extremely difficult to prevent mixing, so called contamination, of the neighboring droplets ejected on the sample-loading face sufficiently or to assure a sufficiently high analytical accuracy.

It was also difficult to further improve the analytical accuracy of the DNA chip and detector described in Prior Art 1, because it was difficult to locate the CCD accurately above the sample-loading face of its DNA chip. More specifically, it was quite difficult to hold the distance between the CCD and all droplets ejected on the sample-loading face accurately. Namely, it was quite difficult to eliminate the fluctuation in the distance between each droplet and the CCD because of the difference in position (fixed position) of the droplets ejected on the sample-loading face.

In the case of this DNA chip and detector, when the emission or color signal is weaker, it becomes more difficult to detect the signal by CCD, which leads to deterioration in analytical sensitivity. In addition, such a DNA chip is larger in size, demanding a design of an extremely larger dark room in the system and thus prohibiting the miniaturization of the system.

Alternatively, the detector described in Prior Art 2 employs containers made of a transparent material formed on a transparent substrate or dents formed on a surface transparent substrate produced by surface treatment as the fluorescence reaction vessels. As a result, it was difficult to miniaturize the reaction field (droplet), increase the density and analytical efficiency further, reduce analysis cost further, and miniaturize the analyzer at the level described above at the same time. Namely, it was not easy to form micro-scale dents that can store the droplets having a volume of 1,000 pL or less (preferably 35 pL or less, more preferably 1.2 pL or less) on the transparent substrate surface at high density. It was also not easy to reduce the fluctuation in the capacity of each dent sufficiently at that time. It becomes more difficult to assure a sufficiently high analytical accuracy, if the fluctuation in the capacity of dents could not be avoided sufficiently.

When water-based droplets are used as the sample in the reaction field array described in Prior Art 3, the convex matrix pattern (second area) on the substrate surface should be hydrophobic. The pattern is specifically formed with a resin material such as photosensitive resin (e.g., paragraph numbers 0029 and 0035 to 0038 in Prior Art 3). The convex matrix pattern of a resin material such as photosensitive resin formed on a substrate is more vulnerable to exfoliation from the substrate and consequently makes it difficult to provide a sufficiently high reliability. In particular, it was difficult to prevent all or partial exfoliation of the convex matrix pattern sufficiently from the substrate. Thus, it was difficult to assure a sufficiently high reliability when used repeatedly or not used over an extended period of time. Although the reason why the convex matrix pattern is so easily separated from the substrate is not clearly understood, the present inventors believe that the vulnerability is related to the fact that the convex matrix pattern is connected to the substrate surface via weaker bonds such as those of physical absorption, intermolecular force, hydrogen bonding, or the like.

In addition, the convex matrix pattern formed on the substrate surface for the reaction field arrays described in Prior Art 3 is a metal convex matrix pattern prepared by a film-forming method employing vapor-phase deposition. However, the pattern, which is also vulnerable to the exfoliation described above, did not provide a sufficiently high

reliability when used repeatedly or not used over an extended period of time. If a metallic convex matrix pattern is used, the convex matrix pattern surface tends to form a hydrophilic film containing metal oxide, resulting in more frequent contamination when droplets of an aqueous sample are used.

In regard to the reaction field arrays described in Prior Art 3, a convex matrix pattern made of a resin material such as photosensitive resin is also formed on a substrate. However, it was quite difficult to control and uniformize the thickness of the resin film by the method. For example, a convex matrix pattern is formed by forming a resin film on a substrate and patterning the film by removing part of the resin film, for example, by means of etching. Removal of part of the film is often accompanied by drastic increase in the fluctuation of film thickness. Greater fluctuation in film thickness results in fluctuation in the capacity of reaction fields and hence in difficulty in obtaining a sufficiently high analytical accuracy.

Further, in the case of the reaction field arrays described in Prior Art 3, the convex matrix pattern is generally thicker and makes it extremely difficult to increase the density of reaction fields to 10,000 pieces/cm$^2$ or more. For example, in the case of the reaction field arrays described in Prior Art 3, it is disclosed that the contamination can be prevented by increasing the thickness of convex matrix pattern to 1 µm or more (e.g., Claim 24 and paragraph number 0044 in Prior Art 3). However, the method may enable reduction of the capacity of reaction fields to 1,000 pL or less (e.g., to 800 pL), but it seems extremely difficult to increase the density of reaction fields to 10,000 pieces/cm$^2$ or more.

The biological sample-analyzing device described in Prior Art 4 has reaction cells larger in capacity (e.g., the size of reaction cell: 2 mm in diameter and 2 mm in depth, in paragraph number 0016 of Prior Art 4). In contrast, analytes such as genes, immobilized DNAs, and the like have a size on the nanometer order. Accordingly, as the reaction field is quite larger than the size of the analyte genes and immobilized DNAs, such a device demands a great amount of sample solution in a single reaction cell. An insufficient amount of sample may lead to decrease in hybridization efficiency and consequently to decrease in detection accuracy.

All of the problems above exist not only in the technical field of analysis using the DNA chips and occur in an analogous manner in any other fields if the miniaturization and high-density spotting of reaction fields on a substrate surface is attempted at a higher level, for example, in the technical fields of qualitative or quantitative analysis for determining the substances contained in the liquid phase and of development and analysis of chemical and biochemical reactions which take place in a liquid-phase reaction field.

Brief Summary of Invention

The present invention is made in view of the problems above, and an object thereof is to provide a sample-analyzing device that retains a sufficiently high analytical sensitivity even when miniaturization and high-density spotting of reaction fields are attempted (in particular, for reducing the capacity of reaction field to 1,000 pL or less and increasing the density of reaction fields to 10,000 pieces/cm$^2$ or more), and that can be miniaturized easily and used repeatedly, and the process of manufacturing the same.

After intensive studies for achieving the object, the inventors have found that the object could be achieved when the analyte-containing droplet is a droplet containing either water or a water-soluble solvent, a plurality of dents are formed by using a hydrophobic organic molecular film prepared from an organic molecule on the face of a substrate where the droplets are ejected (sample-loading face), and the droplet is stored in the dent.

Accordingly, the present invention provides a sample-analyzing device, comprising a substrate having a sample-loading face having two or more dents for independently storing two or more droplets containing an analyte, wherein:

the sample-loading face is divided at least into a first area coated with a hydrophobic organic molecular film and two or more second areas of which the inside is not coated with the organic molecular film and the entire peripheral area is surrounded by the first area;
a bottom face of the dents each constitutes the second area;
each of the peripheral area of the dents including its internal side surface is formed with the organic molecular film coating the first area;
two or more photoelectric conversion units are arranged inside said substrate;
each of the photoelectric conversion units independently allows photoelectric conversion of the lights respectively emitted from the two or more droplets stored respectively in the two or more dents;
the two or more photoelectric conversion units are placed respectively for the two or more dents; and
the organic molecular film is formed by using an organic molecule and bound to the sample-loading face via covalent bonds.

In the present invention, the "droplet" is a tiny drop containing an analyte and at least one solvent of water and a water-soluble solvent. The droplet may contain other solutes or solvent as needed according to the purpose of analysis in the range that does not impair the properties above.

Also in the present invention, the state of "two or more photoelectric conversion units being formed respectively for two or more dents respectively" indicates the following state: Namely, α pieces of dents are formed on a sample-loading face [dent 1, dent 2, ..., dent i, ..., dent α] (wherein, i=1, 2, ..., α ; 1≤ α; and i represents the number of dents.); and the same α pieces of photoelectric conversion units [photoelectric conversion unit 1, photoelectric conversion unit 2, ..., photoelectric conversion unit i, ..., photoelectric conversion unit α] (wherein, i=1, 2, ..., α ; 1≤ α; i represents the number of respective two or more photoelectric conversion units; and photoelectric conversion unit i has an identical i with dent i) are arranged in the substrate. A photoelectric conversion unit (photoelectric conversion unit i) is placed one to one for a dent (dent i) for exclusive analysis of the droplet stored in the dent (dent i).

Location of the photoelectric conversion unit formation in the substrate (position of the photoelectric conversion unit i relative to dent i) is not particularly limited, if the unit can detect the light emitted from the droplets stored in the corresponding dent (dent i). However, for the purpose of minimizing the effective optical path from the dent to the photoelectric conversion unit (from dent i to photoelectric conversion unit i) and thus improving analytical sensitivity sufficiently and for miniaturization of the device, the photoelectric conversion unit is preferably placed almost immediately below the corresponding dent.

In addition, one photoelectric conversion unit may have one photoelectric conversion element (e.g., photodiode) or alternatively, two or more photoelectric conversion elements in the present invention. For miniaturization of the sample-analyzing device, one photoelectric conversion unit preferably has one photoelectric conversion element. For ensuring the analytical sensitivity of the instrument, one photoelectric conversion unit preferably has two or more photoelectric conversion elements.

In the present invention, the "organic molecular film" is a film formed by using an organic molecule as raw material and bound to the sample-loading face via covalent bonds. The organic molecular film may be a single layer (1 layer) or a laminated structure consisting of multiple layers, if it has a dent capacity and a dent density in the favorable range. When a second layer is formed on a first layer formed in advance, the first functional group may not be present on the surface of the first layer. In such a case, the first functional group may be introduced by surface treatment. Further, the organic molecular film may be a film that has both areas of a single-layer film and a laminated film. Such a film is usable when it is desirable to divide a plurality of dents on a sample-loading face into two or more groups and make the dent capacity in each group different from each other.

In the sample-analyzing device according to the present invention described above, the organic molecular film formed on the sample-loading face, which is formed by using an organic molecule, has an extremely small thickness. As a result, it is possible to reduce the size of the dents formed on the sample-loading face capacity drastically and to produce dents capable of storing microdroplets having a volume of 100 pL or less. The "stored" state is not only the state wherein a droplet is completely contained in a dent, but also include the state wherein only part of the droplet is placed in the dent and the other part thereof is protruded from the opening of the dent if the droplet is immobilized thereto.

The hydrophobic organic molecular film formed on the sample-loading face is connected to the sample-loading face quite firmly, because the terminal of the raw organic molecule is immobilized on the sample-loading face as it is bound thereto via covalent bonds. Accordingly, even if the distance between neighboring two dents (dimension of the first area coated with the organic molecular film) on the sample-loading face is reduced significantly, the organic molecular film separating the neighboring dents is bound to the sample-loading face quite firmly and thus prevented from exfoliation sufficiently. In addition, because the bottom face of each dent (second area) is hydrophilic, the droplet stored in the dent is securely immobilized onto the bottom face of dent by hydrogen bonding, and prevented from diffusion of the droplet to the area outside the dent where it is once stored.

The present invention also provides a process of manufacturing a sample-analyzing device, comprising:

a substrate-forming process of forming a substrate containing two or more photoelectric conversion units inside in the two-dimensionally arranged state and having at least one hydrophilic first functional group selected from the group consisting of -OH, -$NH_2$, =N-H, and -SH at least on one of the two facing primary faces that becomes a sample-loading face; and

an organic molecular film-forming process forming two or more dents for independently storing two or more droplets containing an analyte that are placed for the two or more photoelectric conversion units respectively by dividing the sample-loading face of the substrate into a first area selectively coated with a hydrophobic organic molecular film and two or more second areas of which the inside is not coated with the organic molecular film and the entire peripheral area is surrounded by the first area, wherein

the organic molecular film is formed by steps of:

bringing an organic molecule having a second functional group that is capable of binding to the first functional group in a condensation reaction at one end of the chain and a hydrophobic third functional group at the other end

of the chain into contact with the sample-loading face; and
binding the organic molecular film to the sample-loading face covalently by allowing the first functional group and the second functional group to react in the condensation reaction so that a bottom face of the dents each constitutes the second area and each of the peripheral area of the dents including its internal side surface is formed with the organic molecular film coating the first area.

The process of manufacturing the sample-analyzing device according to the present invention provides the sample-analyzing device according to the present invention described above easily and reliably.
These and other objects, features and advantages of the present invention will become more apparent upon reading of the following detailed description along with the accompanying drawings.

BRIEF DESCRIPTION OF THE DRAWINGS

Figure 1 is a perspective view illustrating a first embodiment of the sample-analyzing device according to the present invention.
Figure 2 is a schematic partial cross-sectional view illustrating the basic configuration of the sample-analyzing device shown in Figure 1.
Figure 3 is a perspective view illustrating a second embodiment of the sample-analyzing device according to the present invention.
Figure 4A is a schematic perspective view illustrating the basic configuration of the nozzle in the droplet supply unit 40 of the sample-analyzing device 101 shown in Figure 3; and Figures 4B and 4C are schematic drawings illustrating a method of positioning the droplet supply unit 40 relative to the dent 3 in the sample-analyzing device 101.
Figures 5A and 5B are schematic drawings illustrating another method of positioning the droplet supply unit 40 relative to the dent 3 in the sample-analyzing device 101.
Figure 6A is a schematic perspective view illustrating another basic configuration of the nozzle of the droplet supply unit 40 in the sample-analyzing device 101 shown in Figure 3; and Figures 6B is schematic drawings illustrating another method of positioning the droplet supply unit 40 relative to the dent 3 in the sample-analyzing device 101.
Figure 7 is a perspective view illustrating another embodiment of the sample-analyzing device according to the present invention.
Figure 8A is a schematic cross-sectional view illustrating an example of the resist pattern formed on the primary face of a substrate (sample-loading face) in the organic molecular film-forming process for producing the sample analyzer of EXAMPLE 1, and Figure 8B is a microphotogram showing the resist pattern in Figure 8A as observed from the direction normal to the primary face of substrate.
Figure 9A is a schematic cross-sectional view illustrating an example of the resist pattern and organic molecular film formed on the primary face of a substrate (sample-loading face) in the organic molecular film-forming process for producing the sample-analyzing device of EXAMPLE 1; and Figures 9B is a microphotogram showing the resist pattern in Figure 9A as observed from the direction normal to the primary face of substrate.
Figure 10 is a schematic cross-sectional view illustrating an example of the resist pattern formed on the substrate in an organic molecular film-forming process for producing the sample-analyzing device of EXAMPLE 1.
Figure 11A is a schematic cross sectional view illustrating the state in which droplets of an aqueous sodium chloride solution are stored in the dents formed on the substrate of the sample analyzer of EXAMPLE 1, and Figures 11B is a microphotogram showing the substrate surface shown in Figure 11A as observed in the direction normal to the primary face of substrate.
Figure 12 is a spectrum obtained by infrared spectroscopic analysis of an organic molecular film.
Figure 13 is a spectrum obtained by $^{1}H$-nuclear magnetic resonance analysis of an organic molecular film.
Figure 14 is a spectrum obtained by $^{19}F$-nuclear magnetic resonance analysis of an organic molecular film.
Figure 15 is a spectrum obtained by organic mass spectrometry (positive ion analysis) of an organic molecular film.
Figure 16 is a spectrum obtained by organic mass spectrometry (negative ion analysis) of an organic molecular film.
Figure 17 is a spectrum obtained by X-ray photoelectron spectroscopy of an organic molecular film.
Figure 18 is a photograph showing the cross sectional seen under transmission electron microscope.

Detailed Description of Invention

Hereinafter, favorable embodiments of the present invention will be described in detail with reference to drawings. In the following description, the same codes are designated to the same or corresponding parts to eliminate

duplicated explanation.

[First embodiment]

Figure 1 is a perspective view illustrating a first embodiment of the sample-analyzing device according to the present invention. Figure 2 is a schematic partial cross sectional view illustrating a basic configuration of the sample-analyzing device shown in Figure 1. As shown in Figures 1 and 2, a sample-analyzing device 100 has a plate substrate 1 (semiconductor integrated circuit substrate) having a sample-loading face F1 whereon two or more dents 3 for storing respectively two or more droplets containing an analyte are formed. The sample-analyzing device 100 additionally has at least a CPU 4, a memory unit 5 and a data input/output unit 6 integrally formed on the side face of the substrate 1.
As shown in Figure 2, the sample-loading face F1 is at least divided into a first area F11 coated with a hydrophobic organic molecular film 2 and two or more second areas F12 that are not coated with the organic molecular film 2 and thus hydrophilic inside. The bottom face of each dent 3 constitutes the second area F12, and the peripheral area of each dent 3 including its internal side surface is made of the organic molecular film 2 forming the first area F11. In the sample-analyzing device 100, all the area on the sample-loading face F1 except the second areas F12 is the first area F11, and the entire first area F11 is covered with the organic molecular film 2. The organic molecular film 2 is formed by using an organic molecule and is bound to the sample-loading face F1 via covalent bonds.
A photoelectric conversion unit 70 independently allowing photoelectric conversion of the light emitted from the droplet contained in each dent 3 is arranged beneath each of the two or more dents 3 inside the substrate 1. In the sample-analyzing device 100, a photoelectric conversion unit 70 constitutes a photodiode (photoelectric conversion element).
Further in the sample-analyzing device 100, the substrate 1 is a laminated structure comprising a protective layer 12 (top layer) that allows transmission of the light emitted from the droplets and has a sample-loading face F1 and a semiconductor layer 7 formed beneath the protective layer 12 containing the photoelectric conversion unit 70.
More specifically, in the sample-analyzing device 100 shown in Figure 2, the substrate 1 has a structure having an inorganic oxide layer 8, an interlayer insulation film 9, and an insulation film 10 between the protective layer 12 and the semiconductor layer 7, in that order as seen from the side of semiconductor layer 7 to the side of protective layer 12. It also has a color filter 11 in the area below each dent 3 (or above the photoelectric conversion unit) between the insulation film 10 and the protective layer 12. It additionally has a light-shielding film 15 in the area except the area immediately beneath each dent 3 (or area except the area immediately above the photoelectric conversion unit) between the interlayer insulation film 9 and the insulation film 10. In addition, a first electrode 13 is embedded in the inorganic oxide layer 8 and a second electrode 14 is placed in the area close to the first electrode 13 between the inorganic oxide layer 8 and the interlayer insulation film 9.
The inorganic oxide layer 8 is a layer formed for accommodating the first electrode 13 and second electrode 14. The inorganic oxide layer 8 is a layer formed on the top face of the semiconductor layer 7 in the integrated state and transmits the light emitted from the droplet stored in the dent 3. An area of silicon nitride is formed occasionally in the area of the inorganic oxide layer 8 below the first electrode 13. The inorganic oxide used for the inorganic oxide layer 8 is not particularly limited, if it transmits the light emitted from the droplet stored in the dent 3. An example thereof is $SiO_2$.
The interlayer insulation film 9 is a layer formed for prevention of the electrical contact between the light-shielding film 15 and the second electrode 14. The insulator material used for the interlayer insulation film 9 is not particularly limited, if it transmits the light emitted from the droplet stored in the dent 3. An example thereof is $SiO_2$.
The insulation film 10 is a separation layer for prevention of the contact between the color filter 11 and the light-shielding film 15. The insulator material used for the insulation film 10 is not particularly limited, if it transmits the light emitted from the droplet stored in the dent 3.
The protective layer 12 (top layer) is a layer having the sample-loading face F1 whereon dents 3 are formed. The protective layer 12 is also a layer formed for ensuring the space for a color filter 11 if formed and for protection of the color filter 11. The material used for the protective layer 12 is not particularly limited, if it transmits the light emitted from the droplet stored in the dent 3. An example thereof is $SiO_2$.
The light-shielding film 15 is a film formed for preventing the light emitted from the droplet stored in the dent 3 from entering into the area of the semiconductor layer 7 except the pn-junction face of photoelectric conversion unit 70. The material used for the protective layer 12 is not particularly limited, if it shields and does not transmit the light emitted from the droplet stored in the dent 3. Examples thereof include metal thin films (metal thin films of aluminium, chromium, and the like).
The color filter 11 is a filter used for guiding only a light having a particular wavelength in the light emitted from the droplet stored in the dent 3 selectively into the photoelectric conversion unit 70. The color filter 11 should transmit only the light having a particular wavelength to be detected in the light emitted from the droplet stored in the dent 3. Accordingly, the constituent material is selected properly according to the desirable light having a particular

wavelength above.

The first electrode 13 is an electrode formed to each photoelectric conversion unit 70. The first electrode 13 is used for controlling the electric potential of the pn-junction face of photoelectric conversion unit 70 independently. For independent control of the electric potential of the pn-junction face of photoelectric conversion unit 70, the first electrode 13 is electrically connected to a register (not shown in the figure). The register is embedded in the substrate 1. The electric potential of the pn-junction face of photodiode varies according to the first electrode 13 controlled by the register. Electrons generated in the photodiode are transferred to a $p^-$ separation region 76 and then further to an n-type vertical transfer range 78.

The second electrode 14 is also an electrode formed to each photoelectric conversion unit 70. The second electrode 14 is an electrode for transferring the charges in the n-type vertical transfer range 78. The second electrode 14 is not an essential element, and for example, the first electrode 13 may play the function of the second electrode.

The semiconductor layer 7 has a structure containing an n-type silicone substrate 71 and a first p well 72 placed over the n-type silicone substrate 71. In addition, an n-type semiconductor range 74 is formed in the area over the top face of the first p well 72 and almost beneath the dent 3. The photodiode (photoelectric conversion element) consisting of an n-type semiconductor range 74 and the first p well 72 functions as a photoelectric conversion unit 70 having a pn-junction face.

In addition, a $p^-$ separation region 76 is formed in the area on the top face of first p well 72 close to the photoelectric conversion unit 70. An n-type vertical transfer range 78 is formed above the top face of the first p well 72 close to the $p^-$ separation region 76. Further, a second p well 77 is formed between the first p well 72 and the n-type vertical transfer range 78. In the area on the top face of first p well 72 between the groups consisting of a photoelectric conversion unit 70, a $p^-$ separation region 76, an n-type vertical transfer range 78, and a second p well 77, a $p^+$ separation region 73 for separation of the groups is formed.

As for the concentrations of the impurities introduced to the first p well 72 and the second p well 77, for example, the first p well 72 has a relatively lower concentration, while the second p well 77 has a relatively higher concentration. The second p-well 77 is normally formed for compensation of the decrease in charge transfer efficiency associated with reduction in size of the n-type semiconductor range 74. The $p^+$ separation region 73 and the $p^-$ separation region 76 are normally areas for separation of the photodiode and the n-type vertical transfer range 78. The $p^-$ separation region 76 is also an area for transferring charges from the photoelectric conversion unit to the n-type vertical transfer range 78 while the first electrode 13 is reading the electric potential. The $p^+$ range 75 on the n-type semiconductor range 74 is formed for prevention of ultraviolet light from entering into the photoelectric conversion unit, when ultraviolet light radiation is occurring and not desirable.

The n-type vertical transfer range 78 is columnar range placed in parallel with the row direction of the photoelectric conversion units 70 two-dimensionally arranged in 6 lines $\times$ $\gamma$ rows (5 lines $\times$ 7 rows in the sample-analyzing device 100 shown in Figure 1), and is formed in each row. The state of "two-dimensionally arranged in 6 lines $\times\gamma$ rows" is a state where $\gamma$ pieces of photoelectric conversion units 70 are arranged at the same interval in the line direction on a straight line on the plane and 6 pieces of photoelectric conversion units 70 are arranged at the same interval in the row direction (direction almost orthogonal to the line direction) on a straight line on the same plane. By the control of the electric potential of the pn-junction face by the first electrode 13 and second electrode 14, charges generated in the photoelectric conversion unit 70 are transferred without mixing or dispersion through the n-type vertical transfer range 78 in the vertical direction (row direction). The dents 3 corresponding to the respective photoelectric conversion units 70 are formed as two-dimensionally arranged in 6 lines $\times\gamma$ rows on the sample-loading face F1,

In the substrate 1, a columnar n-type horizontal transfer region (not shown in the figure) is formed almost orthogonal to the $\gamma$ pieces of n-type vertical transfer ranges 78 in the outer edge area of plane identical with that of $\gamma$ pieces of n-type vertical transfer ranges 78 in the semiconductor layer 7. The charges traveling in the vertical direction in the n-type vertical transfer range 78 are then transferred into this n-type horizontal transfer region, where they are driven to move in the horizontal direction (line direction).

In addition, an operation signal input terminal for the vertical transfer region (not shown in the figure) is connected to each of the $\gamma$ pieces of n-type vertical transfer ranges 78. The other end of the operation signal input terminal for the vertical transfer region is electrically connected to the register (not shown in the figure) described above. Charges generated in the pn-junction face of photoelectric conversion unit 70 are driven to move into the n-type vertical transfer range 78, by applying a voltage to the first electrode 13 by using the operation signal input terminal for the vertical transfer region. Then, the charges are driven to move in the vertical direction in the n-type vertical transfer range 78 by applying a voltage to the second electrode 14. It is possible to drive the charges generated in the pn-junction face of photoelectric conversion unit 70 to move in the vertical direction in the n-type vertical transfer range 78 by applying a voltage to the first and second electrodes one by one.

In addition, an operation signal input terminal for the horizontal transfer region (not shown in the figure) is connected to the n-type horizontal transfer region. The other end of the operation signal input terminal for the horizontal transfer region is electrically connected to the register (not shown in the figure) described above. It is possible to drive

the charges generated in the pn-junction face of photoelectric conversion unit 70 to move in the horizontal direction in the n-type horizontal transfer region, by applying a voltage to the first electrode 13 and the second electrode 14 one by one by using the operation signal input terminal for the horizontal transfer region.

The substrate 1 has additionally an output amplifier (not shown in the figure) for amplified output of received light information and a signal output terminal (not shown in the figure).

Further, the sample-analyzing device 100 has an amplifier transistor for amplifying the charge signal photoelectrically converted in the photodiode, a reset transistor for resetting the charge on the photodiode after the charge signal is read, and the metal wiring and power supply line (not shown in the Figure) associated with them.

The memory unit 5 stores sequentially the analytical information obtained in the photoelectric conversion unit 70 [information on the light emitted in the light-emitting reaction (wavelength or color, strength, light intensity, and the like)]. The memory unit 5 also stores standard data, i.e., standards for analysis, for example, for identification or quantitative determination of the analyte present in the dent based on the analytical information obtained in the photoelectric conversion unit 70. Such standard data are, for example, information about what kind of probe gene is to be placed previously in which dent 3 among a plurality of dents 3 on the sample-loading face F1 when a gene analysis is performed by using a probe gene. The memory unit also stores data for identification of the site of each dent 3, for example, about the location of the dent 3 in which light emission is detected. It also stores standard data for specifying the wavelength or the color of the light passing through a color filter 11 when it is used. The memory unit 5 may store additionally the standard data for positioning accurately a droplet ejection means for ejection of droplet into the dent 3 (e.g., droplet supply unit 40 in the sample-analyzing device 101 described in the second embodiment below) relative to the dent 3, for example, standard data for locating the droplet ejection means relative to the substrate 1, such as the distance between dents 3, the area of the bottom face of dent 3, and the like. The memory unit 5 may further store the programs for the CPU 4 to perform processing (processing for analysis and positioning) based on the standard data. The memory unit 5 may also have a function to store the results of the processing conducted by the CPU 4. The memory unit 5 may also contain the programs and data needed for exchange of data and information with external devices.

The CPU 4 is connected to the memory unit 5 and the data input/output unit 6. The CPU 4 compares the analytical information obtained in the photoelectric conversion unit 70 with the standard data stored in the memory unit 5 and performs processing according to the program for the processing, and demands the results of analysis, for example, about identification or quantitative determination of the analyte. The CPU 4 may also have functions to judge the validity of data based on processing results and to perform estimation of the analyte composition by statistically processing the analytical results obtained in each dent 3. The CPU 4 may be configured to control the ejection means for ejecting droplets into the dent 3 based on the standard data for positioning stored in the memory unit 5 and to perform the positioning relative to dents 3. The CPU 4 may also be configured to collect the data obtained in the photoelectric conversion unit 70. The CPU 4 may also have functions to make the user recognize analytical results, results of analysis by statistical and other means, and estimations or conclusions obtained from these results. Further, the CPU 4 may also have functions to detect abnormalities relevant to measurement, analysis, and others, perform suitable corrective actions, and warn the abnormal conditions to outside.

The data input/output unit 6 is electrically connected to an information output device such as monitor and an information output/input device such as computer. The output unit 6 handles data, for example, outputs analysis data and inputs standard data for analysis to the memory unit 5. The data input/output unit 6 may also have a function to supply power as needed.

Location of the photoelectric conversion unit 70 arranged inside the substrate 1 is not particularly limited, if the unit can detect the light emitted from the droplet immobilized in the corresponding dent 3. However, for ensuring a sufficiently high analytical sensitivity by shortening the effective optical path between the dent 3 and the photoelectric conversion unit 70 and for miniaturizing the sample-analyzing device 100, the photoelectric conversion unit 70 is preferably placed almost directly beneath the corresponding dent as shown in Figure 2.

Each dent 3 formed on the sample-loading face F1 stores a droplet. As described above, the dents 3 are formed by using an organic molecular film 2 having an extremely low thickness. Accordingly, the dents 3 have an extremely small capacity easily storing a microdroplet having a volume of 100 pL or less.

The hydrophilic first functional groups described below are bound to the bottom face of each dent 3 (second area F12). Due to the hydrophilic group, the droplet stored in dent 3 is firmly immobilized on the bottom face of the dent 3 via hydrogen bonds. Accordingly, diffusion of the droplet once stored in the dent 3 to outside is effectively prevented. In addition, the hydrophilic first functional group is also bound to the first area F11 of sample-loading face F1 before the organic molecular film 2 is formed. During formation of the organic molecular film 2 on the first area F11, raw organic molecules for film 2 react with the hydrophilic first functional group in a condensation reaction, and thus, the organic molecular film 2 obtained is fixed onto the sample-loading face F1 in the state covalently bound.

The hydrophilic first functional group bound to the sample-loading face F1 preferably has an active hydrogen atom that is capable of binding to the organic molecule in a condensation reaction. The first functional group having an active hydrogen that is capable of binding to organic molecule in a condensation reaction more preferably has at

least one structure selected from the group consisting of -OH, $-NH_2$, =N-H, and -SH at the end binding to the organic molecules in the condensation reaction above. Instead of the first functional groups above, the first functional group having an active hydrogen atom that is capable of binding to organic molecules in a condensation reaction more preferably has at least one group selected from the group consisting of $-SO_3H$, - $SO_2H$, $-PO_3H$, $-PO_3H_2$, and $-CO_2H$.

All of the first functional group having an active hydrogen atom that binds to organic molecules in a condensation reaction is not necessarily exposed on the surface of the sample-loading face F1. Only the active hydrogen or only part of the group containing an active hydrogen, -OH, -SH, =N-H, or $-NH_2$, may be exposed on the surface of the sample-loading face F1, and other part of the molecule not containing a active hydrogen may be contained inside the substrate 1. For example, if the other part of the molecule not containing an active hydrogen atom is inside the substrate, the other part not containing a active hydrogen may be bound to the constituent element of substrate 1. More specifically, for example, if the substrate 1 in the neighborhood of sample-loading face F1 is made of a light-permeable metal oxide and the first functional group is $-PO_3H$, all of the $-PO_3H$ group may be exposed on the surface of the sample-loading face F1 or only -OH in the $-PO_3H$ group may be exposed while the $-PO_2$- group is inside the substrate. The $-PO_2$- portion hidden in the substrate may be $-PO_2$- as it is. Alternatively, the oxygens bound to P may bind, for example, to a metal atom (metal ion) M in bulk metal oxide, forming a structure of -P-O-M-.

The kind of the covalent bond formed between the first area F11 of substrate 1 and the organic molecular film 2 by the condensation reaction between the first functional group and the second functional group of organic molecule described below depends on the structure of the hydrophilic first functional group bound to the sample-loading face F1 and the kind of organic molecule used for production of the organic molecular film. The covalent bond is preferably at least one bond selected from the group consisting of -SiO-, -SiN-, and -SiS- from the viewpoint of productivity.

In this way, the organic molecular film 2 is bound onto the sample-loading face F1 extremely firmly. For that reason, the organic molecular film 2 separating neighboring two dents is bound to the sample-loading face F1 quite firmly, as it is sufficiently prevented from exfoliation even when the distance between neighboring two dents 3 on the sample-loading face (the area of the first area coated with the organic molecular film) is shortened significantly.

Even when the distance between neighboring dents 3 is extremely small and the reaction fields (dents for storing droplets) are formed at a density of 10,000 pieces/$cm^2$ or more, it become possible to prevent mixing (or prevent contamination) of droplets stored in neighboring dents 3 sufficiently. For that reason, it is possible to assure a sufficiently high analytical accuracy of the sample-analyzing device 100.

The size (capacity), shape, and location of each dent 3 and the distance among dents can be easily controlled by properly patterning the organic molecular film 2. For maximizing the advantageous effects of the invention, the dents are formed in the following manner.

That is, the volume of the droplet stored in the dent 3 is preferably 0.01 to 1000 pL, more preferably 0.01 to 35 pL, and still more preferably 0.01 pL to 1.2 pL, for miniaturizing the reaction fields (dents for storing droplets) and raising the density thereof and for making the capacity of each reaction field preferably 1,000 pL or less and the density of reaction fields 10,000 pieces/$cm^2$ or more.

As described above, when the dents 3 are formed in the configuration above, droplets supplied are placed in the dents protruding from the openings almost in the hemispherical shape or almost in the columnar shape having a hemispherical tip atop. In this manner, the volume of the droplet actually placed in a dent (droplet immobilized on the bottom face of dent 3) becomes significantly larger than the geometrical capacity inside the dent. Accordingly, even when dents 3 having a smaller geometrical capacity are formed, it is possible to use a larger amount of droplets sufficient to allow high-sensitivity analysis. In addition, droplets supplied on the bottom face of dents 3 are placed in the dents protruding from the openings almost in the hemispherical shape or almost in the columnar shape having a hemispherical tip atop. Thus, the droplet immobilized on the bottom face of dent 3 has a shape effective in collecting light. From this point too, the sample analyzer 100 can easily have a sufficient high analytical sensitivity.

Accordingly, when the volume of the droplet stored in a dent is 0.01 to 1000 pL, the capacity of the dent 3 can be reduced to a value sufficiently smaller that. Specifically, in such a case, the capacity of the dent 3 is preferably $2\times10^{-6}$ to 1 pL.

From the same viewpoint as above, when the volume of the droplet stored in a dent is 0.01 to 35 pL, the dent capacity is preferably $2\times10^{-6}$ to $1\times10^{-1}$ pL. Further, from the same viewpoint, when the volume of the droplet stored in a dent is 0.01 pL to 1.2 pL, the dent capacity is preferably $2\times10^{-6}$ to $2\times10^{-3}$ pL and more preferably $2\times10^{-6}$ to $7\times10^{-4}$ pL.

For miniaturizing the reaction fields (droplets stored in dents) and raising the density thereof and for making the capacity of each reaction field preferably 1,000 pL or less and the density of reaction fields 10,000 pieces/$cm^2$ or more, the number of the dents 3 formed on the sample-loading face F1 per unit area is preferably 10,000 pieces/$cm^2$ or more. In addition, for making the density of reaction fields 100,000 pieces/$cm^2$ or more, the number of the dents 3 formed on the sample-loading face F1 per unit area is more preferably 100,000 pieces/$cm^2$ or more. Further, for making the density of reaction fields 1,000,000 pieces/$cm^2$ or more, the number of the dents formed on the sample-loading face F1 per unit area is still more preferably 1,000,000 pieces/$cm^2$ to 8,000,000 pieces/$cm^2$.

For sufficient prevention of contamination, the organic molecular film 2 preferably is sufficiently hydrophobic. Thus, the organic molecular film 2 preferably has the following properties from the same point. That is, when a 5.3-μL droplet is supplied onto the surface of an organic molecular film at 20°C, the contact angle between the droplet and the surface is preferably 80 to 180°, more preferably 90 to 180°, and still more preferably 100 to 160°. In addition, the critical surface energy of the organic molecular film at 20°C is in the range of 72 mN/m or less, preferably 8 to 72 mN/m, and more preferably 8 to 25 mN/m. The contact angle can be determined, for example, according to the method specified in JIS R3257: 1999.

The thickness of the organic molecular film 2 is not particularly limited, if the thickness is suitable for miniaturization and high-density packing of the reaction fields. It is not particularly limited, in particular, if the thickness is suitable for controlling the capacity of the dents on the sample-loading face in the range of 0.01 to 1 pL and the density of the dents on the sample-loading face in the range of 10,000 pieces/$cm^2$ or more. The thickness may be, for example, identical with or larger than the size (length) of a molecule, which is bound onto the sample-loading face F1 covalently. However, for ensuring the advantageous effects of the invention, the thickness of the organic molecular film 2 is preferably 0.5 to 50 nm, more preferably 0.5 to 10 nm, and still more preferably, 0.5 to 5 nm.

More specifically, when the volume of the droplet stored in the dent 3 is 0.01 to 1,000 pL and the density of dents 3 is 10,000 pieces/$cm^2$ or more, the capacity of the dent 3 is preferably $2\times10^{-6}$ to 1 pL and the area of the bottom face of dent (second area F12) is preferably 4 to 17,500 $\mu m^2$. The thickness of the organic molecular film 3 is preferably controlled so that the capacity and the area of the dent 3 fall in the ranges above.

When the volume of the droplet stored in the dent 3 is 0.01 to 35 pL and the density of the dents on the sample-loading face is 100,000 pieces/$cm^2$ or more, the capacity of the dent 3 is preferably $2\times10^{-6}$ to $1\times10^{-1}$ pL; the area of the bottom face of dent 3 (second area F12), 4 to 1,600 $\mu m^2$; and the thickness of the organic molecular film 2, 0.5 to 50 nm.

Further, when the volume of the droplet stored in the dent 3 is 0.01 pL to 1.2 pL and the density of the dents on the sample-loading face is 1,000,000 pieces/$cm^2$ or more, the capacity of the dent 3 is preferably $2\times10^{-6}$ to $2\times10^{-3}$ pL; the area of the bottom face of dent 3 (second area F12), 4 to 155 $\mu m^2$; and the thickness of the organic molecular film 2, 0.5 to 10 nm. In such a case, the capacity of the dent 3 may be further reduced to $2\times10^{-6}$ to $7\times10^{-4}$ pL favorably. It is also favorable to make the thickness of the organic molecular film 2 of 0.5 to 5 nm while keeping the area of the bottom face of dent 3 (second area) in the same range.

In addition, the width of the organic molecular film 2 formed between neighboring dents 3 is preferably 0.1 μm or more and still more preferably 1 to 100 μm for more reliable prevention of contamination. Even with such a width of organic molecular film 2, it is possible to adjust easily the capacity of the dent 3 in the range of 0.01 to 1 pL and the density of dents in the range of 3 10,000 pieces/$cm^2$ or more. When the material separating the neighboring dents 3 from each other is made only of an organic molecular film 2, the distance between the dents 3 is identical with the width of the organic molecular film 2. In such a case, the distance between the dents 3 is preferably 0.1 μm or more and more preferably 1 to 100 μm.

The organic molecule is preferably a compound having a second functional group that can bind to the first functional group bound to the sample-loading face F1 in a condensation reaction at one end of the chain and a third hydrophobic functional group at the other end of the chain. By progress of the condensation reaction between the second functional group and the first functional group bound to the sample-loading face F1, the organic molecular film 2 is bound more firmly to the sample-loading face F1 via covalent bonds.

For more reliable production of organic molecular film having a thickness of 0.5 to 50 nm, the organic molecule preferably has one of the following structures (i) to (iii).

That is, organic molecules having a structure (i) has a functional group represented by the following General Formula (1) as the second functional group that is capable of binding to the first functional group in a condensation reaction. The organic molecule also has a functional group selected from the group consisting of a methyl group, halogen-substituted methyl groups, a,vinyl group, cyclic ether groups having 2 to 4 carbons, a phenyl group, halogen-substituted phenyl groups, and a cyano group as the third functional group. Additionally, a bivalent organic group represented by the following General Formula (2) between the second and third functional groups is bound.

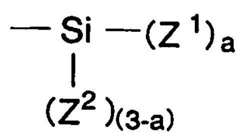

···(1)

$$-C_bE_{2b}- \quad (2)$$

In Formula (1), $Z^1$ represents at least one atom or atomic group selected from the group consisting of F, Cl, Br, I, -OH, -SCN, -NCO, and alkoxy groups having 1 to 5 carbons. $Z^2$ represents at least one atom or atomic group selected from the group consisting of H, and alkyl groups having 1 to 5 carbons. a is an integer of 1 to 3. In Formula (2), E represents at least one atom selected from the group consisting of H and F. b is an integer of 2 to 22.

Organic molecules having a structure (ii) has same structure as (i) and additionally has at least one bivalent functional group selected from the group consisting of functional group represented by the following General Formula (3), -O-, -COO-, and $-C_6H_4-$ between the carbon atoms constituting the carbon main skeleton of the bivalent organic group represented by the General Formula (2) of the structure (i). In the following General Formula (3), g and h each independently are integer of 1 to 3.

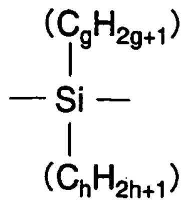

···(3)

Organic molecules having a structure (iii) has a functional group represented by the following General Formula (1) that is capable of binding to the first functional group in a condensation reaction as the second functional group. The organic molecules have additionally two monovalent groups selected from the group consisting of a methyl group, halogen-substituted methyl groups, a vinyl group, cyclic ether groups having 2 to 4 carbons, a phenyl group, halogen-substituted phenyl groups, and a cyano group as the third functional groups. The organic molecules have a structure further containing a trivalent organic group represented by the following General Formula (4) between the second and third functional groups.

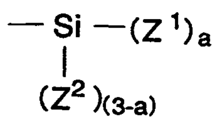

···(1)

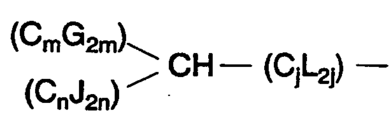

···(4)

In Formula (1), $Z^1$ represent at least one atom or atomic group selected from the group consisting of F, Cl, Br, I, -OH, -SCN, -NCO, and alkoxy groups having 1 to 5 carbons. $Z^2$ represents at least one atom or atomic group selected from the group consisting of H and alkyl groups having 1 to 5 carbons. a is an integer of 1 to 3. In Formula (4), $C_jL_{2j}$ is a functional group that binds to the second functional group. $C_mG_{2m}$ and $C_nJ_{2n}$ each are a functional group that binds to the third functional group. G, J and L may be the same or different from each other and each represent at least one atom selected from the group consisting of H and F. j is an integer of 1 to 18. m and n each independently are integer of 0 to 7.

Examples of the second functional groups represented by (1) in the organic molecules having one of the structure of (i) to (iii) include various substituted silyl groups such as halogenated silyl groups, alkoxysilyl groups, and

isocyanatesilyl groups. In particular, those of a=3 are preferably, and examples thereof include trihalogenated silyl groups, trialkoxysilyl groups, and triisocyanatesilyl groups.

Halogens contained in the trihalogenated silyl groups include F, Cl, Br, and I. Among trihalogenated silyl groups, a trichlorosilyl group is preferable. The alkoxy group in the trialkoxysilyl groups preferably has 1 to 3 carbons. Specific examples thereof include a methoxysilyl group, an ethoxysilyl group, and a butoxysilyl group.

Such organic molecules having a various kinds of substituted silyl groups at the terminal can bind to the substrate surface via covalent bonds as described above. The organic molecular film 2 formed becomes firmly bound to the first area F11 by the covalent bonds. As a result, the organic molecular film 2 becomes superior in durability. Specifically, an organic molecule having a halogenated silyl group causes dehydrohalogenation reaction with the active hydrogen contained in the first functional group of the first area F11. An organic molecule having an alkoxysilyl group reacts with the active hydrogen contained in the first functional group, eliminating alcohol. An organic molecule having an isocyanatesilyl group reacts the active hydrogen contained in the first functional group, eliminating isocyanate. In this manner, respective organic molecules are bound to the sample-loading surface via siloxane bonds (-SiO-) covalently.

The covalent bonds between the organic molecule and the substrate vary according to the kind of first functional group, and, for example, a covalent bond of -SiN- is formed when the first functional group is -NH, and a covalent bond of -SiS- when the first functional group is -SH.

For more reliable production of a sufficiently hydrophobic organic molecular.film, among the third functional groups exemplified above in the organic molecule having a structure of any one of (i) to (iii), $CF_3$-, $CH_2Br^-$, or $CH_2Cl^-$ is preferable, and $CF_3$- is more preferable as the halogen-substituted methyl group. Organic molecules having $CF_3$- as the third functional group is easily oriented, often providing an organic molecular film 2 on the sample-loading face wherein the organic molecules are more densely packed. Therefore, it is possible to produce a hydrophobic organic molecular film 2 more reliably.

Among the third functional groups exemplified in the organic molecule having a structure of any one of (i) to (iii), the cyclic ether group having 2 to 4 carbons is preferably $C_2H_3O$-. When the third functional group is $C_2H_3O^-$, it is possible to expand the thickness of the organic molecular film 2 easily by using the ring-opening (addition) reaction of the epoxy group. It is also possible to keep the uniformity of film thickness sufficiently at the same time.

For example, when the third functional group is $C_2H_3O^-$, it is possible to expand the thickness of the organic molecular film 2, by first allowing a ring-opening (addition) reaction of the epoxy group to proceed by bringing alcohol into contact with the terminal of an organic molecular film 2 formed and then allowing the group in an alcohol other than -OH (hydrocarbon group) to bind to the terminal of the third functional group. In producing an organic molecular film 2 relatively larger in thickness, it is often difficult to keep the uniformity of film thickness sufficiently if an organic molecule almost equivalent in thickness to the film thickness is used. Therefore, the process above is advantageous in that it is possible to form an organic molecular film 2 relatively larger in film thickness and higher in the uniformity of film thickness easily by using a relatively smaller organic molecule (organic molecule having $C_2H_3O^-$ as the third functional group).

In addition, among the third functional groups in the organic molecule having a structure of any one of (i) to (iii) exemplified above, the halogen-substituted phenyl group is preferably $C_6F_5$- for more reliable production of a sufficiently hydrophobic organic molecular film. An organic molecule having $C_6F_5$- as the third functional group is more easily oriented and often provides an organic molecular film 2 on the sample-loading face wherein the organic molecules are more densely packed. Therefore, it is possible to produce a hydrophobic organic molecular film 2 more reliably.

The organic molecule having a structure of (i) preferably has a structure represented by any one of the following General Formulae (20) to (29).

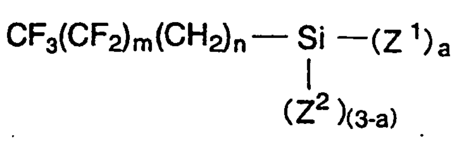

···(20)

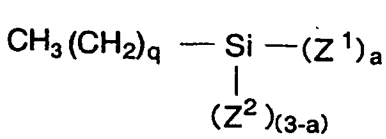

···(21)

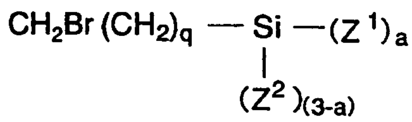

...(22)

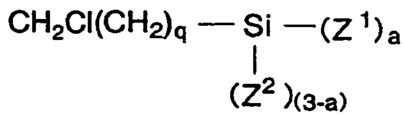

...(23)

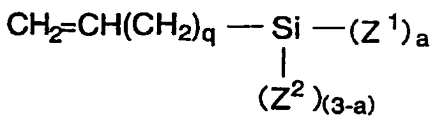

...(24)

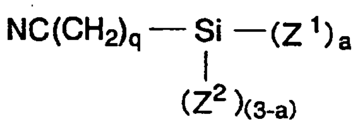

...(25)

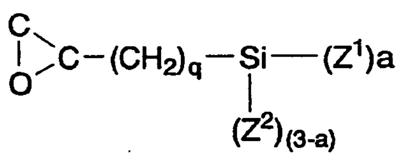

...(26)

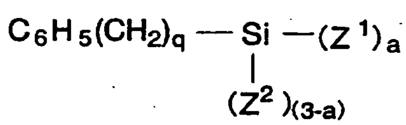

...(27)

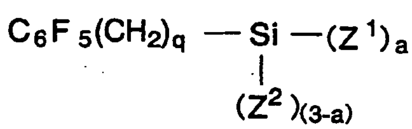

...(28)

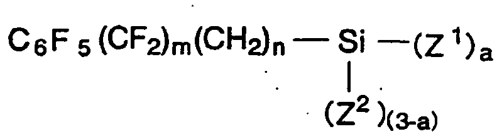

...(29)

In General Formulae (20) to (29), Z is the same group as Z in Formula (1); a is the same number as a in Formula (1); and q is an integer of 2 to 22. m and n each are an integer satisfying the following formulae (I) to (III) at the same time:

$$0 \leq m \leq 14 \qquad (I);$$

$$0 \le n \le 15 \quad \text{(II);}$$

and

$$2 \le (m+n) \le 22 \quad \text{(III).}$$

The organic molecule having the structure of (ii) preferably has a structure represented by any one of the following General Formulae (30) to (39).

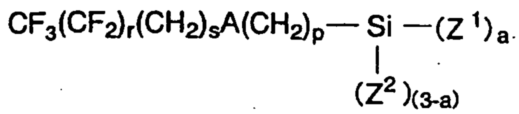

•••(30)

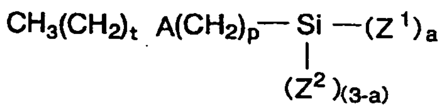

•••(31)

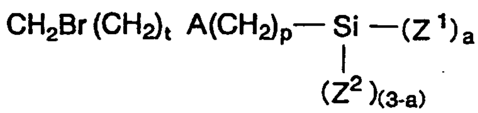

•••(32)

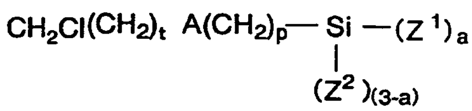

•••(33)

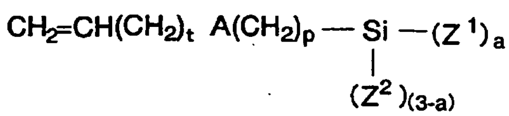

•••(34)

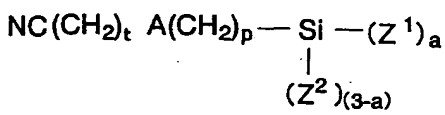

•••(35)

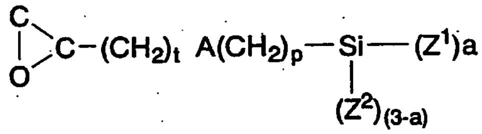

•••(36)

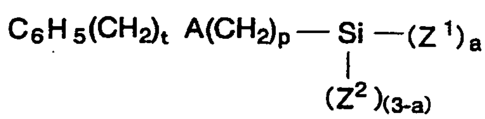

•••(37)

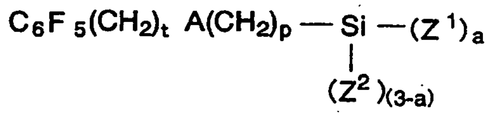

•••(38)

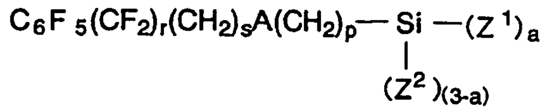

•••(39)

In General Formulae (30) to (39), Z is the same group as Z in Formula (1); a is the same number as a in Formula (1): and A represents at least one bivalent functional group selected from the group consisting of functional groups represented by General Formula (3), -O-, -COO-, and $-C_6H_4-$. t is an integer of 1 to 10. p is an integer of 1 to 18. r and s each are an integer satisfying the conditions represented by the following formulae (IV) to (VI) at the same time:

$$0 \leq r \leq 14 \quad \text{(IV);}$$

$$0 \leq s \leq 15 \quad \text{(V);}$$

and

$$2 \leq (r+s) \leq 22 \quad \text{(VI).}$$

The organic molecule having the structure of (iii) preferably has a structure represented by any one of the following General Formulae (40) to (49).

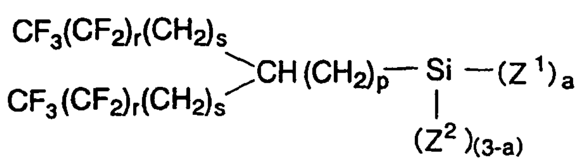

•••(40)

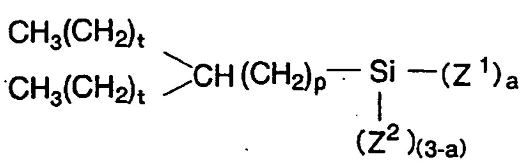

•••(41)

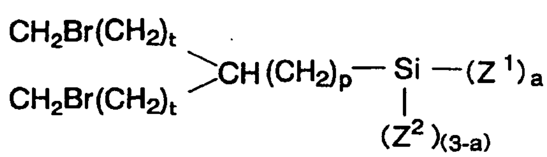

•••(42)

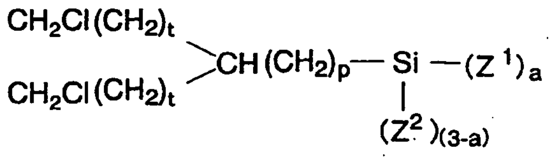 ···(43)

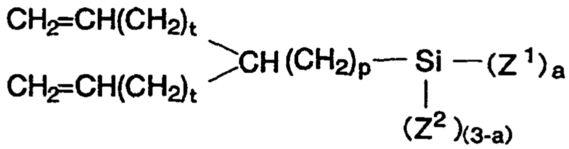 ···(44)

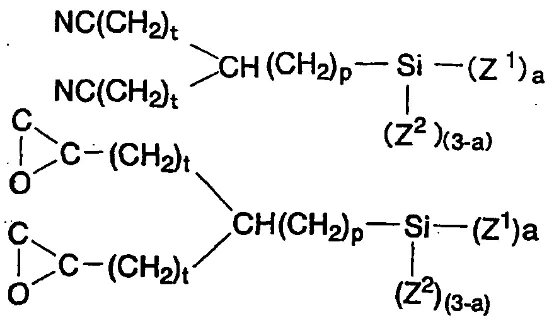 ···(45)

···(46)

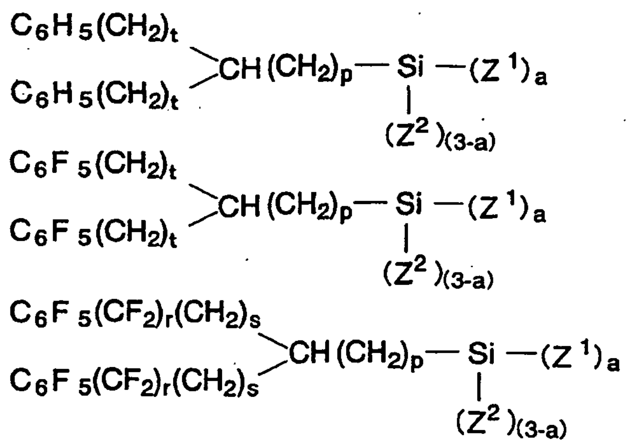 ···(47)

···(48)

···(49)

In General Formulae (40) to (49), Z is the same group as Z in Formula (1); a is the same number as a in Formula (1); and t is an integer of 1 to 10. p is an integer of 1 to 18. r and s each are an integer satisfying the conditions represented by the following formulae (IV) to (VI) at the same time:

$$0 \leq r \leq 14 \quad \text{(IV);}$$

$$0 \leq s \leq 15 \quad \text{(V);}$$

$$2 \leq (r+s) \leq 22 \quad \text{(VI).}$$

Among the organic molecules represented by General Formulae (20) to (29), the organic molecules represented by General Formulae (20) and (21) are preferable for ensuring the uniformity of the organic molecular film 2

and for production of an organic molecular film 2 on the sample-loading face wherein the organic molecules are densely packed.

Among the organic molecules represented General Formula (20), the following organic molecule represented by Formula (201) is preferable from the same viewpoint,

$$CF_3(CF_2)_7(CH_2)_2SiCl_3 \quad (201)$$

Among the organic molecules represented by General Formula (21), the following organic molecule represented by General Formula (202) is preferable from the same viewpoint.

$$CH_3(CH_2)_7(CH_2)_2SiCl_3 \quad (202)$$

Among the organic molecules represented by General Formulae (201) and (202), the organic molecule represented by Formula (201) is preferable for obtaining sufficient hydrophobicity.

Further, among the organic molecules represented by General Formulae (30) to (39), the organic molecules represented by General Formulae (30) and (31) are preferable for ensuring the uniformity of the organic molecular film 2 sufficiently and for production of an organic molecular film 2 on the sample-loading face wherein the organic molecules are densely packed.

Among the organic molecules represented by General Formula (30), the following organic molecule represented by Formula (301) to (306) are preferable from the same viewpoint.

$$CF_3(CF_2)_3(CH_2)_2O(CH_2)_{15}SiCl_3 \quad (301)$$

$$CF_3COO(CH_2)_{15}SiCl_3 \quad (302)$$

$$CF_3(CF_2)_3(CH_2)_2Si(CH_3)_2(CH_2)_9SiCl_3 \quad (303)$$

$$CF_3(CF_2)_7Si(CH_3)_2(CH_2)_9SiCl_3 \quad (304)$$

$$CF_3(CH_2)_2Si(CH_3)_2(CH_2)_{15}SiCl_3 \quad (305)$$

$$CF_3CH_2O(CH_2)_{15}SiCl_3 \quad (306)$$

Among the organic molecules represented by General Formula (31), the organic molecules represented by the following General Formulae (307) to (312) are preferable from the same viewpoint.

$$CH_3(CH_2)_5O(CH_2)_{15}SiCl_3 \quad (307)$$

$$CH_3COO(CH_2)_{15}SiCl_3 \quad (308)$$

$$CH_3(CH_2)_5Si(CH_3)_2(CH_2)_9SiCl_3 \quad (309)$$

$$CH_3(CH_2)_7Si(CH_3)_2(CH_2)_9SiCl_3 \quad (310)$$

$$CH_3(CH_2)_2Si(CH_3)_2(CH_2)_{15}SiCl_3 \quad (311)$$

$$CH_3CH_2O(CH_2)_{15}SiCl_3 \quad (312)$$

Among the organic molecules represented by General Formulae (201), (202) and (301) to (312) described above, the organic molecule represented by Formula (201) is most preferable, for ensuring the uniformity of the organic molecular film 2 sufficiently, for production of an organic molecular film 2 on the sample-loading face wherein the organic molecules are densely packed, and for obtaining sufficiently high hydrophobicity,

The organic molecular film 2 formed on the sample-loading face F1 to which the favorable first functional group described above is bound by using the preferred organic molecule described above, which is easily prepared in uniform thickness, suppresses the fluctuation in the capacity of dents 3 sufficiently and keeps the capacity of each reaction field (each dent storing droplets) more uniform. Accordingly, the sample-analyzing device 100 ensures a sufficiently high analytical accuracy, also from this viewpoint.

Organic molecules other than the organic molecules described above, including the organic molecules described in Jpn. Unexamined Patent Publication Nos. 4-132637, 4-256466, 10-180179, and 4-359031 may be used in the range that does not impair the advantageous effects of the invention.

The size of the plate substrate 1 is properly selected according to various conditions, for example, the desirable numbers of dents 3, photoelectric conversion units 70 (or photoelectromagnetic conversion units), and analytical samples (droplets) to be processed. However, for sufficient miniaturization of the sample-analyzing device 100, the area of the primary face having the sample-loading face F1 is preferably 0.05 to $8\times10^{-6}$ $mm^2$. In addition, for sufficient miniaturization of the sample-analyzing device 100, the thickness of substrate 1 is preferably 0.05 to 1.5 mm and more preferably 0.1 to 1.0 mm.

As described above, the size (capacity), shape, and location of each dent 3 and the distance among dents can be easily controlled by properly patterning the organic molecular film 2. According to the minute two-dimensional positional pattern of the photoelectric conversion units 70 arranged inside the substrate 1, the sample-loading face F1 is divided into the first area F11 and the second area F12. Thus, it is possible to easily form an organic molecular film 2 only on the first area F11 selectively. It also becomes possible to form dents 3 on the sample-loading face two-dimensionally in an extremely fine pattern. Thus, it becomes possible for the photoelectric conversion unit 70 to detect the light-emitting reaction occurring in the droplet stored in each dent 3 efficiently.

Accordingly, dents 3 extremely smaller in capacity are formed at an extremely high density on the sample-loading face of the sample-analyzing device 100. In addition, it is possible to miniaturize the reaction fields and raise the density of the dents (in particular, to decrease the capacity of reaction field to 1,000 pL or less and increase the density of reaction fields to 10,000 pieces/$cm^2$ or more) easily and reliably. The sample-analyzing device 100 has a sufficiently high analytical accuracy. Further, the sample-analyzing device 100 allows analysis with an extremely small amount of sample and thus reduction in analysis cost. The sample-analyzing device 100 having the dents 3 at high density allows analysis of a large number of multiple samples, analysis of multiple items, and analysis of a large number of a single sample simultaneously.

As described above, the sample-analyzing device 100 has a configuration that allows miniaturization of the reaction fields and increase in the density of dents easily and reliably. Accordingly, it allows easier miniaturization. In the sample-analyzing device 100, the organic molecular film 2 is bound to the first area F11 of sample-loading face F1 via covalent bonds. For that reason, exfoliation of the organic molecular film 2 is prevented effectively even when the sample-analyzing device 100 is used repeatedly or not used for an extended period of time. Thus, the sample-analyzing device 100 has a sufficiently high reliability.

The sample-analyzing device 100 can determine presence or absence of the analyte contained in droplet and also the content thereof. During biological analysis, the droplet may additionally contain a probe that reacts with its analyte. Further, the probe may be immobilized previously in the dent 3. The photoelectric conversion unit 70 detects the reaction between the probe and the analyte. Because the dents 3 are surrounded by a hydrophobic organic molecular film 2, it is possible to prevent diffusion of a probe-containing solution when it is used for immobilization of the probe in the dents 3.

In the present invention, the "probe" is a probe specified in JIS K 3600 2392, i.e., a polynucleotide fragment used for detecting a gene in recombinant DNA tests, such as a cDNA prepared from the analyte mRNA or fragment designed and prepared from the amino acid sequence of a desirable protein.

The probe forming a hybrid with the analyte is preferable. Examples of such probes include oligonucleotides, polynucleotide, cDNAs, genome DNAs, single-strand DNAs, RNAs, the labeled derivatives thereof, antigens, antibodies, oligopeptides, and polypeptides.

Among them, the probe is preferably at least one compound selected from the group consisting of polynucleotides and labeled polynucleotides. The at least one probe selected from the group consisting of polynucleotides and labeled polynucleotides may be a polymer synthesized by pure chemical means or by biochemical means. More specifically, the at least one probe selected from the group consisting of polynucleotides and labeled polynucleotides is preferably a polymer prepared from at least one compound selected from the group consisting of deoxyribonucleotides and ribonucleotides, i.e., a polymer having a structure containing at least one repetition unit selected from the group consisting of deoxyribonucleotide-derived recurring unit and ribonucleotide-derived recurring unit.

In regard to the other probes above, if the analyte is an enzyme, a substrate for the enzyme, for example, may be used as the probe. Alternatively if the analyte is a substrate, the corresponding enzyme may be used as the probe. The kind of analytes is not particularly limited, and examples of the analytes include nucleic acids such as DNAs and RNAs, proteins, lipids, and the like, and samples to be handled include, for example, biological samples such as blood, cell, and the like; and synthetic samples such as nucleic acid, protein, and the like.

In the sample-analyzing device 100, its optical detection circuit operates, for example, as follows: First, electric charges (electrons) generated by photoelectric conversion on the pn-junction face according to the intensity of the light entering into the photodiode in each photoelectric conversion unit 70 accumulates in the n-type range 74. The photodiode of each photoelectric conversion unit 70 receives the light for a certain period. Then, by applying a voltage to the first electrode 13 and thus forming a depletion layer (not shown in the figure) in the $p^-$ separation region 76, charges accumulated in the n-type range 74 are transferred into the n-type vertical transfer range 78. Although the first electrode 13 is shown only in the range above the n-type vertical transfer range 78 in Figure 2, the first electrode 13 stretches over the $p^-$ separation region 76, and the operations above proceeds in this region. This operation is conducted simultaneously in the photodiode of each photoelectric conversion unit 70. A voltage is designed to apply to the first electrode 13 and the second electrode 14 via a register. The register is designed to apply a voltage to the first electrode 13 and the second electrode 14 at a certain interval.

The first electrode 13 and second electrode 14 are placed side by side along the top surface of the n-type vertical transfer range 78. As shown in Figure 2, part of the first electrode 13 is placed above the second electrode 14 in many cases. Application of a voltage to the first electrode 13 results in accumulation of the charges generated in the photodiode in the lower part of the first electrode 13 over the n-type vertical transfer range 78. Then, a voltage is applied to the second electrode 14 and the voltage applied to the first electrode 13 is eliminated. In this manner, the charges in the range of the first electrode 13 over the n-type vertical transfer range 78 are transferred to the range of the n-type vertical transfer range 78 beneath the second electrode 14. Then, a voltage is applied to the first electrode 13 and the voltage applied to the second electrode 14 is eliminated. By removal of the voltage, the charges present in the range of second electrode 14 above the n-type vertical transfer range 78 are transported not to the range of the n-type vertical transfer range 78 beneath the first electrode 13 but to the range of an n-type vertical transfer range 78 beneath the next first electrode. For prevention of regression of the charges to the range of the n-type vertical transfer range 78 beneath the first electrode 13, the impurity concentrations of part of the ranges of the n-type vertical transfer range 78 respectively beneath the first electrode 13 and second electrode 14 are often made different from each other.

By repeating the operations above sequentially, it becomes possible to retransfer the charges transferred to the range of the n-type vertical transfer range 78 in the vertical direction. The charges that reached the edge of the n-type vertical transfer range 78 are then transferred into the horizontal transfer unit (not shown in the figure). The operations here are the same as those in the range of the n-type vertical transfer range 78 described above, and the charges transferred from the row of photodiodes are transported in the horizontal transfer unit sequentially in the amount generated in one photodiode unit. Charge information is supplied to outside via an output amplifier. The operational speed of the register responsible for the vertical transfer is of course higher than that of the resister for the horizontal transfer.

The photodiode may receive the next light during the charge transfer operations. There are two electrodes, first electrode 13 and second electrode 14, in Figure 2, but the number of electrodes may be reduced to one or increased to three or four according to the desirable efficiency of charge transportation. Increase in number results in smoother charge transportation. By increasing the number of electrodes to three or four, it becomes possible to eliminate the difference in impurity concentration at the part of the regions of n-type vertical transfer range 78 beneath the first electrode 13 and second electrode 14 described above. When light emission intensity is smaller, it is possible to obtain a suitable amount of charges by elongating the light-receiving period.

To eliminate the adverse effects by the dark current generated in each dent 3 on analytical results, it is possible to conduct a blank test of performing the operations above before supplying analyte-containing droplets in each dent 3, and to reflect the results of this blank test to the analytical results to be obtained. The blank test may be performed only in a selected dent, for example, by selecting at least one dent 3 on a sample-loading face F1 as it represents all dents 3 thereon. Alternatively, for further improvement in analytical accuracy, the blank test may be performed in all dents 3 individually.

The operations described above are for the system employing a charge-coupled device (CCD). Operations

for metal-on-silicon (MOS) light-receiving devices are of course different from those above. However, although the method of driving MOS devices is different, from that above, MOS devices, which read the light information in each photodiode in the same manner, still satisfy the requirements for the present invention.

Hereinafter, a favorable embodiment of a process of manufacturing the sample-analyzing device 100 will be described.

First, a substrate 1 is produced in the substrate-forming process. As described above, the substrate 1 contains two or more photoelectric conversion units placed in the two-dimensionally oriented form. The substrate 1 has a hydrophilic first functional group having at least one structure selected from the group consisting of -OH, $-NH_2$, =N-H, and -SH on at least one of the two primary faces.

The substrate 1 is a semiconductor integrated circuit substrate; the process of manufacture is not particularly limited, and any one of publicly known thin film-manufacturing technology may be used. For example, the substrate 1 is produced by using the manufacturing technology, which is employed for production of MOS's (metal-oxide layer-semiconductors), i.e., production of ICs (integrated circuits) from silicone substrate.

However, as far as the top layer is concerned, a layer having the first functional group previously bound to the surface (sample-loading face) may be formed as the top layer (protective layer 12 in the case of the substrate 1) in advance. Alternatively, after a substrate having a top layer not containing the first functional group is formed, a first functional group having a structure containing an active hydrogen, which binds to the second functional group described above in a condensation reaction, may be bound to the surface by surface treatment of its surface (sample-loading face).

Hereinafter, the method of connecting the first functional group having a structure containing an active hydrogen, which binds to the second functional group in a condensation reaction, to the top layer surface (sample-loading face) by surface treatment will be described.

Any one of publicly known surface treatment methods may be used for connecting the first functional group onto the sample-loading face F1. Examples of the methods include methods of chemically oxidizing the top layer surface, subjecting the surface to a plasma treatment in the presence of oxygen, and ozone treatment. Also included is a method of hydrophilizing the top layer surface (sample-loading face), for example, with $SiCl_4$, $HSiCl_3$, $SiCl_3O\text{-}(SiCl_2O)_\eta\text{-}SiCl_3$ (wherein, η is an integer of 0 to 6), $Si(OH)_4$, $HSi(OH)_3$, $Si(OH)_3O\text{-}(Si(OH)_2O)\eta\text{-}Si(OH)_3$ (wherein, η is an integer of 0 to 6), or the like.

Surface oxidation of the top layer will be described more specifically. For example, surface oxidation of the top layer may be performed by irradiating the surface of the top layer with UV in the presence of oxygen and a hydrogen atom-supplying substance. UV irradiation decomposes oxygen in the gas phase, generating ozone, which in turn reacts with the hydrogen atom-supplying substance, generating active species having an active hydrogen. In addition, ultraviolet irradiation on the top layer surface leads to cleavage of the covalent bonds among the atoms constituting the area close to the surface of the top layer, forming unbound bonds. As a result of the reaction between the unbound bonds and the active species containing an active hydrogen atom, a top layer surface to which the first functional groups are bound is produced.

Preferable examples of the hydrogen atom-supplying substances include water, ammonia, and the like, from the viewpoints of availability and easiness in handling. For example, if water is used as the hydrogen atom-supplying substance, it is possible to introduce a functional group at least containing a structure represented by -OH onto the top layer surface as the first functional group. Alternatively, if ammonia is used, it is possible to introduce a functional group at least having a structure represented by $-NH_2$ as the first functional group. Corona treatment, plasma treatment, or the like may be used, replacing the UV irradiation.

If a semiconductor integrated circuit substrate like the substrate 1 is used, it is preferable to use a silicone material as the constituent material for the top layer (protective layer 12) from the following viewpoints: Layers containing a silicone material often have a structure containing hydroxyl and silanol groups previously present on the surface due to the property inherent to silicon of being oxidized easily. As a result, the layers containing a silicone material are layers having abundant first functional groups containing an active hydrogen atom described above. Therefore, use of a layer containing a silicon material as the top layer is advantageous because the layer is favorable for the condensation reaction between the first functional group and the second functional group of the organic molecule. If the substrate like a semiconductor integrated circuit substrate is used, an inorganic oxide layer made of an inorganic oxide is preferably formed on the top layer (protective layer 12) from the following viewpoints: An inorganic oxide layer provides a layer having a hydroxyl group or the like and has abundant first functional groups containing an active hydrogen on the surface. Therefore, use of an inorganic oxide layer as the top layer is advantageous, as it is favorable for the condensation reaction between the first functional group and the second functional group of the organic molecule. An example of the inorganic oxide for such a layer is $SiO_2$.

The method of producing substrate 1 is not limited to that of forming an organic molecular film 2 on the top layer of substrate 1 (protective layer 12) described above. For example, the substrate 1 may be produced by preparing a substrate for use as a top layer, forming an organic molecular film 2 previously on the surface of the substrate, and

bonding the substrate to the substrate carrying the photoelectric conversion unit 70 or the like. In such a case, the substrate whereon an organic molecular film is previously formed (substrate for use as the top layer) is not particularly limited, if it has a first functional group in advance or a surface to which the first functional group can be bound by surface treatment, thus physical and chemical durability to the treatment in the organic molecular film-forming process, and a light permeability allowing transmission of the light emitted from the droplets stored in dents.

Examples of the substrates include glass substrates, quartz substrates, synthetic quartz substrates, silicon substrate, various polymer substrates such as acrylic substrate, polycarbonate substrate, polystyrene substrate, vinyl chloride substrate, epoxy resin substrate, silicone resin (polydimethylsilicone) substrate, and PMMA (polymethyl methacrylate) substrate, ceramic substrates, metal substrates, and other publicly known substrates. Among them, glass and quartz substrates are favorable, as they have a structure containing many hydroxyl groups on the surface. When one of these substrates is used as the top layer, the first functional group may be bound to the substrate surface by the surface treatment. In addition, the substrate may have the shape of sheet, if the first functional group can bind to the substrate and the substrate is transparent.

Then, an organic molecular film 2 is formed on the sample-loading face of substrate 1 in the organic molecular film-forming process. In other words, dents 3 are formed on the sample-loading face.

In the organic molecular film-forming process, the primary face of substrate 1 where the first functional group is bound become the sample-loading face F1; the sample-loading face F1 is divided into the first area F11 and two or more second areas F12, and an organic molecular film 2 is formed selectively only on the first area F11. Accordingly, in this process, two or more dents 3 for independently storing two or more droplets respectively are formed so that each of the dents corresponds to each of the two or more photoelectric conversion units.

Further in the organic molecular film-forming process, an organic molecule having a second functional group that is capable of binding to the first functional group of the sample-loading face F1 in a condensation reaction at one end of the chain and having a third hydrophobic functional group at the other end of the chain is used as the raw material for the organic molecular film. The organic molecule is brought into contact with the sample-loading face F1, so that the bottom face of the dent 3 obtained becomes the second area F12 and the peripheral area of dent 2 including its internal side surface is formed by the organic molecular film 2 covering the first area F11. Then, the organic molecular film is bound to the sample-loading face covalently, by allowing the condensation reaction between the first functional group and second functional group to proceed.

From the viewpoints of the thickness and uniformity as well as the productively of the organic molecular film 2, the organic molecular film-forming process preferably include a first process where the sample-loading face of substrate is brought into contact with an organic molecule-containing solution, which is obtained by adding an organic molecule into an aprotic solvent in a container, allowing the condensation reaction to proceed. As described above, when the water content in the gas phase in contact with the organic molecule-containing solution is expressed by a relative humidity at 22°C, the relative humidity in the first process is adjusted to 35% or less, preferably 25% or less, and more preferably 5% or less.

An example of the method favorably used in the first process (first embodiment of the process of manufacturing the sample-analyzing device according to the present invention) will be described below.

First, a resist pattern for coating the range that will become the second area F12 on the sample-loading face F1 is formed; and the area of the sample-loading face where no resist pattern is formed is designated as the first area. The resist pattern is easily formed by using the semiconductor thin film-manufacturing technology. Next, an organic molecular film is selectively coated only on the first area F11 by bringing an organic molecule in contact with the sample-loading face F1 after a resist pattern is formed. Then, two or more dents 3 are formed by removing the resist pattern. The resist pattern may be a positive-type or negative type resist pattern.

The method of bringing an organic molecule into contact with the sample-loading face F1 in the first process is preferably the following method: First, an organic molecule is added into an aprotic solvent, to give an organic molecule-containing solution. Then, the organic molecule-containing solution and a substrate carrying a resist pattern formed are placed in a container such as glove box, where the water content of the internal gas phase can be easily controlled, and allowed to react with each other in the condensation reaction described above.

The aprotic solvent for use in preparing the organic molecule-containing solution is suitably selected according to the kind of the organic molecule, and any aprotic solvent may be used if it is a solvent poorly solubilizing the resist pattern. For efficient and reliable production of an organic molecular film 2 thinner in thickness (0.5 to 50 nm) and superior in the uniformity of film thickness, a fluorine-based solvent is preferable. Favorable examples of the fluorine-based solvents include perfluorocarbon liquids and hydrofluoroether liquids manufactured by Sumitomo 3M. Specifically, "HFE-7200", "PF-5080", and "FC-77" (trade names, manufactured by Sumitomo 3M) are preferable, because they have favorable physical properties, for example, a boiling point favorable for the processing in the first process. The concentration of the organic molecule in the organic molecule-containing solution is not particularly limited, but, for example, approximately $3\times10^{-2}$ to $1\times10^{-1}$ M. The time of the contact between the sample-loading face F1 and the organic molecule-containing solution is not particularly limited, but, for example, several seconds to 10 hours, preferably

1 minute to 1 hour; and the temperature of the organic molecule-containing solution is, for example, in the range of 10 to 80°C, and preferably 20 to 30°C.

The gas constituting the gas phase of which the water content is adjusted in the range above is preferably at least one gas selected from the group consisting of rare gases and a nitrogen gas. However, air may be used in the first process, if it is possible to sufficiently suppress the progress of the oxidation reaction of the organic molecule or the aprotic solvent and the degradation of the organic molecular film by oxidation.

Then, the resist pattern after the organic molecular film formed may be removed by using, for example, acetone. In this manner, two or more dents 3 are formed.

In the method (first embodiment of the process of manufacturing a sample-analyzing device according to the present invention), the method of producing an organic molecular film on the sample-loading face F1 after a resist pattern is formed is not particularly limited to the method described above. Examples of such methods include printing method, transfer printing method, screen method, liquid-ejection method, ink-jet method, stamping method, and the like.

Hereinafter, another favorable example of the method that may be employed in the first process (the second embodiment of the process of manufacturing a sample-analyzing device according to the present invention) will be described below.

First, an organic molecular film is formed on the sample-loading face F1. The organic molecular film is preferably formed at the time under the conditions identical with those of the first process described above, except that an organic molecular film is formed over the entire surface of the sample-loading face F1. Namely, the organic molecular film-forming process preferably include a first process where the sample-loading face of substrate is brought into contact with an organic molecule-containing solution obtained by adding an organic molecule into an aprotic solvent in a container, allowing the condensation reaction to proceed. As described above, when the water content in the gas phase in contact with the organic molecule-containing solution in the first process is expressed by a relative humidity at 22°C, the relative humidity is adjusted to 35% or less, preferably 25% or less, and more preferably 5% or less.

Because no resist pattern is used in this manufacturing process, the aprotic solvent used in preparing the organic molecule-containing solution may be selected suitably according to the kind of the organic molecule used. For efficient and reliable production of an organic molecular film 2 thinner in thickness (0.5 nm to 50 nm) and superior in the uniformity of film thickness, a solvent dissolving the organic molecule sufficiently is preferable. Examples of the solvents include organic solvents such as hexadecane, chloroform, carbon tetrachloride, silicone oil, hexane, and toluene. These solvents may be used alone or as a mixture of two or more solvents.

Among them, mixed solvents containing hexadecane, chloroform and carbon tetrachloride are preferable as the aprotic solvent. Use of such organic solvents, for example, sufficiently inhibits polymerization (polymer generation) of the organic molecule catalyzed by the water present therein, and thus, allow more efficient progress of the condensation reaction between the second functional group of organic molecule and the first functional group on the sample-loading face F1. As a result, the organic molecule is covalently bound to the sample-loading face F1 [for example, via a siloxane bond (-SiO-)], forming an organic molecular film 2. The concentration of the organic molecule in the organic molecule-containing solution is not particularly limited, but, for example, approximately $3\times10^{-2}$ to $1\times10^{-1}$ M. The time of the contact between the sample-loading face F1 and the organic molecule-containing solution is not particularly limited, but, for example, several seconds to 10 hours and preferably 1 minute to 1 hour. In addition, the temperature of the organic molecule-containing solution is, for example, in the range of 10 to 80°C, and preferably 20 to 30°C.

Then, a photomask for selective protection of the organic molecular film 2 coating the range that will become the first area F11 of sample-loading face F1 from ultraviolet light (ultraviolet light irradiation) is provided on the substrate. The photomask has a structure wherein only the organic molecular film coating the range that will become the second area is selectively irradiated with an ultraviolet light when it is placed between the light source of ultraviolet light and the sample-loading face F1 having an organic molecular film formed. Then, an ultraviolet light is irradiated through the photomask on the sample-loading face F1 having the organic molecular film 2 formed. Only the organic molecular film coating the range on sample-loading face F1 that will become the second area F12 is selectively removed by irradiation. In this manner, two or more dents are formed.

If a laser such as excimer laser is used as the UV irradiation means, ultraviolet light may be spot-irradiated on particular spots of the organic molecular film instead of using a photomask. Alternatively, a method of selectively removing only the organic molecular film coating the range on sample-loading face F1 that will become the second area F12, for example, by electron beam irradiation treatment, corona treatment, plasma treatment, or the like instead of UV irradiation may be used. The processing may be carried out in the presence of oxygen. In this manner, it is possible to remove the organic molecular film coating the range on sample-loading face F1 that will become the second area F12 by oxidation.

Then, if the first functional group is bound to the second area F12 in sample-loading face F1 after removal of the organic molecular film 2, preparation of substrate 1 is completed. Alternatively, if the first functional group is not bound to the second area F12, the first functional group is provided on the second area F12, for example, by selectively subjecting the second area F12 to the surface treatment described above

In this method (second embodiment of the process of manufacturing a sample-analyzing device according to the present invention), the method of forming an organic molecular film over the entire surface of the sample-loading face F1 is not particularly limited to the method above. Examples of other methods include printing method, transfer printing method, screen method, liquid-ejection method, ink-jet method, stamping method, and the like.

The following method may be used for production of an organic molecular film 2 having a laminated structure consisting of multiple different layers. After an organic molecular film is formed as the first layer on the sample-loading face as described above, if the first functional group is not present on the surface of the organic molecular film when an organic molecular film is formed as the second layer, the first functional group is provided on the first layer by the surface treatment described above.

More specifically, if a functional group containing a group having an unsaturated bond such as a vinyl group is bound to the surface of a first layer of the organic molecular film formed on the sample-loading face F1, a high-energy ray such as electron beam or X ray is irradiated onto the surface of the organic molecular film in an atmosphere containing water. In this manner, it is possible to introduce the first functional group at least containing an -OH group by irradiating altering the region having an unsaturated bond with the high-energy ray. Alternatively, if a functional group containing a group having an unsaturated bond such as a vinyl group is bound thereto, it is possible to introduce the first functional group at least having an -COOH group, for example, by immersing the region having an unsaturated bond in an aqueous potassium permanganate solution and thus altering the region containing the group having an unsaturated bond.

The thickness of the organic molecular film 2 may be suitably adjusted by selecting the kind (length) of the organic molecule used and by making it the laminated structure described above. The thickness may be also adjusted, for example, by the method of binding other organic molecule having a noncompatible functional group to the end of the third functional group of the organic molecule forming the organic molecular film. Typical examples thereof will be shown below.

Alternatively, when the organic molecule forming the organic molecular film has a double or triple bond at the end of the third functional group as shown in Formula (22), a Grignard reagent (RMgX), for example, may be brought into contact with the organic molecular film after the organic molecular film is formed. It becomes possible to allow the addition reaction between the third functional group and RMgX to proceed and bind the hydrocarbon group (R-) of RMgX to the end of the third functional group by this contact. R in RMgX represents an alkyl group, a halogenated alkyl group, an alkenyl group, or a halogenated alkenyl group having 1 to 23 carbons; and X represents a halogen atom (F, Cl, Br, or I).

When the organic molecule forming the organic molecular film has an epoxy group in the third functional group as shown in Formula (26), alcohol (ROH) may be brought into contact with the organic molecular film after the organic molecular film is formed. It becomes possible to make the ring-opening (addition) reaction of the epoxy group proceed and bind the "R group" of alcohol (ROH) to the end of the third functional group by this contact. R in ROH represents an alkyl group, a halogenated alkyl group, an alkenyl group, or a halogenated alkenyl group having 1 to 23 carbons; and X represents a halogen atom (F, Cl, Br, or I).

Further, in the organic molecular film-forming process, the surface of the layer that will become the top layer of substrate 1 such as the protective layer 12 is preferably smoothened in a surface polishing treatment such as CMP (chemistry machines polishing technology).

Hereinafter, an example of the method of immobilizing an analyte gene and a single-strand DNA (probe) having a complementary sequence previously on each bottom face of dent 3 and performing tests by using a sample-analyzing device 100 will be described.

First, a single-strand DNA is immobilized on the bottom face of each dent 3 (second area F12). The immobilization method is not particularly limited, and any one of publicly known methods commonly used in DNA analysis may be used. Examples thereof include methods of synthesizing a DNA (oligonucleotide) directly on the bottom face of dent 3 (e.g., Affimetrix method); previously binding a linker on the bottom face and then binding a single-strand DNA to the linker; binding a functional group for surface immobilization to the end of a single-strand DNA and binding the functional group for immobilization to the surface; and the like. The linker is not particularly limited, and examples thereof include an amino group, a carboxyl group, and the like. The linker or the immobilized functional group can be bound to the probe or the surface according to the methods known in the art.

Then, an analyte-containing droplet is injected into a dent 3. In such a case, the target DNA contained in the droplet may be previously labeled, for example, with Cy3; or a fluorescence intercalator such as SYBR-Green may be added to the droplet or in the dent 3. Then, an excitation ray is irradiated to the dent 3. If the single-strand DNA immobilized on the bottom face of dent 3 and a target DNA hybridize to each other, forming a double strand, a fluorescence light is emitted from a fluorescence intercalator or a fluorescence-labeled target DNA embedded therein.

For example, when SYBR-Green is used, SHG laser having a wavelength of 473 nm is irradiated. Emitted fluorescence is detected in the photoelectric conversion unit 70 (photodiode in the sample-analyzing device 100). In the sample-analyzing device 100, when multiple different single-strand DNAs are respectively immobilized in each of

dents corresponding to each of the photoelectric conversion units, it becomes possible to test multiple items in single fluorescence detection. Alternatively, when the same single-strand DNA is immobilized in each of the dents corresponding to each of the photoelectric conversion units 70, it is possible to obtain data higher in measurement accuracy (higher in reliability). As described above, it is possible to form dents 3 extremely higher in density in the sample-analyzing device 100. Thus, it is possible to increase drastically the number of samples that can be analyzed at the same time on a sample-loading face F1, even when the inspection equipment is as large as the conventional sample-analyzing devices.

Although analyte genes and single-strand nucleotides having a complementary sequence are exemplified as the probes immobilized on the dent 3, the probe is not limited thereto and the following compounds may also be used. For example, use of an antigen (or antibody) that emits fluorescence in an antigen-antibody reaction allows measurement of the reaction of the antibody (or antigen) in the sample. Other examples of the probes include oligonucleotides, polynucleotides, RNAs, DNAs, and the labeled derivatives thereof, antigens, antibodies, oligopeptides, amino acid sequences, polypeptides, proteins, enzymes, protein nucleic acids (PNA), the substances contained therein, and the like.

An inkjet method (e.g., method of using a piezoelectric element or expansion of a gas by heating) is preferable for supplying an analyte-containing droplet into the dent 3 in sample-analyzing device 101, from the viewpoints of the efficiency in supplying a trace amount of droplet, the accuracy in the amount of droplet, and supply speed. Even by the inkjet method, it is sometimes necessary to significantly reduce the amount of analyte solution used, when expensive and rare analytes are used, for example, in DNA gene analysis and protein analysis. Even in such a case, there is no need for installing a liquid reservoir in the inkjet device. It is possible to adopt a method of inserting the tip of an inkjet nozzle into an analyte solution, absorbing only a needed amount of analyte solution into the tip of the nozzle, and eject the droplet from the nozzle into the dent 3 in every analysis. Alternatively, the method of using a microdispenser or a micropipette may also be used.

[Second embodiment]

Hereinafter, the second embodiment of the sample-analyzing device according to the present invention will be described. The sample-analyzing device 101 in the second embodiment has, in addition to the units in the sample-analyzing device 100 in the first embodiment shown in Figures 1 and 2, additionally a droplet supply unit 40 (inkjet head) having nozzles for ejection of analyte-containing droplets into the dents 3. The configuration except the droplet supply unit 40 is the same as that of the sample-analyzing device 100 in the first embodiment. The CPU 4 is the control unit that drives the nozzles of droplet supply unit 40 and thus adjusts the position of the nozzles relative to the dents 3. Thus, the droplet supply unit 40 contains a driving mechanism for adjusting the position relative to the sample-loading face F1 freely under the direction of CPU 4.

The droplet supply unit 40 will be described below. Figure 3 is a perspective view illustrating a second embodiment of the sample-analyzing device according to the present invention.

As shown in Figure 3, the droplet supply unit 40 in the sample-analyzing device 101 has a configuration that allow ejection of droplets simultaneously into the dents 3 in the same row, among the two-dimensionally arranged 6 lines $\times\gamma$ rows dents 3 (5 lines $\times$7 rows, in this droplet supply unit 40) on the sample-loading face F1. Thus, the droplet supply unit 40 has five nozzles arranged in parallel with the row of dents 3. The distance between the central axes of the five nozzles is adjusted to that identical with the distance between the centers of the five dents 3 on the bottom face in the same row. In this way, the droplets ejected from the ejection holes (not shown in the figure) of five nozzles are ejected respectively to the centers of the bottom face of the corresponding dents 3.

The CPU 4 is electrically connected to the droplet supply unit 40, and adjusts the positions of the nozzles of droplet supply unit 40 relative to dents 3 based on the standard data for positioning stored in the memory unit 5. The control unit also regulates the amount of the droplet ejected from each nozzle. Specifically, the control unit adjusts the position of the droplet supply unit 40 (position of each nozzle) relative to the row receiving droplets. Then, a droplet is ejected from the ejection hole of each nozzle to each dent 3 in the corresponding row (in the direction of arrow A shown in Figure 3). Then, the control unit drives droplet supply unit 40 (the position of each nozzle) to the position facing another row receiving the droplets (e.g., in the direction of arrow B shown in Figure 3), where droplets are ejected into the dents 3 in the corresponding row once again.

The sample-analyzing device 101 shown in Figure 3 has the configuration, which will be described below with reference to Figures 4 to 6, for sufficiently ensuring the accuracy of the position ejecting a droplet from each nozzle in the droplet supply unit 40.

Figure 4A is a schematic perspective view illustrating a basic configuration of a nozzle in the droplet supply unit 40 of the sample-analyzing device 101 shown in Figure 3. Figures 4B and 4C are schematic drawing showing the method of adjusting the position of the droplet supply unit 40 relative to the dents 3 shown Figure 4A in the sample-analyzing device 101.

As shown in Figure 4A, the nozzles 50 in the droplet supply unit 40 have a cylindrical shape. Each nozzle 50 has a smooth almost circular face at the tip. The nozzle 50 has an ejection hole 501 for ejection of droplets in the center of the tip face. In addition, the nozzle 50 has a light-emitting slit 502 (e.g., light-emitting diode) for positioning in the tip face. The light-emitting slit 502 has a cross section (surface exposed at the tip face of the nozzle 50) in the shape of donut. The ejection hole 501 is placed inside the light-emitting slit 502 having a ring-shaped cross section (at the center of circle). The cross-sectional shape of the light-emitting slit is not limited to the ring-shaped shape.

As shown in Figure 4B, a light-receiving zone 51 for receiving the light emitted from the light-emitting slit 502 at the tip face of nozzle 50 is formed at the edge of the sample-loading face F1 of substrate 1. The light-receiving zone 51 has a photoelectric conversion element (e.g., photodiode) formed inside the substrate 1.

An example of the operations of the droplet supply unit 40 controlled by the CPU 4 will be described below.

As shown in Figure 4B, before ejection of droplets, the CPU 4 first locates the droplet supply unit 40 to the position where the tip of one of the multiple nozzles 50 become immediately above the light-receiving zone 51 of substrate 1, based on the standard data for positioning stored in the memory unit 5. The standard data are, for example, pre-set information on the relative position of the droplet supply unit 40 relative to the sample-loading face F1 immediately before droplets are ejected (distance between the sample-loading face F1 and the tip of nozzle 50, geometric position of the tip of nozzle 50 in the plane in parallel with the sample-loading face F1, and the like).

As shown in Figure 4C, it is also possible to determine the stop position of the droplet supply unit 40 by making the CPU 4 instruct the driving mechanism of droplet supply unit 40 to stop when the light-receiving zone 51 detects the light from the light-emitting slit 502. In such a case, when the light-receiving zone 51 detects the emission light from the light-emitting slit 502, movement of the droplet supply unit 40 is discontinued and the positioning of the droplet supply unit 40 before droplet ejection is completed.

Data on the distance from the light-receiving zone 51 to the dent 3 into which a droplet is ejected and the distance between respective dents 3 are previously stored in the droplet supply unit 40. After the droplet supply unit 40 is relocated based on the data and the position thereof is adjusted, a droplet is ejected. In this manner, it becomes possible to position the droplet supply unit 40 very accurately. Further, it becomes possible to determine the position of droplet ejection by making the CPU 4 instruct each nozzle 50 to eject a droplet when the photoelectric conversion unit 70 of the dent 3 detects the light from the light-emitting slit 502 of nozzle 50 above the dent 3. In such a manner, it becomes possible to position each nozzle 50 relative to the corresponding dent 3 reliably.

It is also possible to adjust the distance between the sample-loading face F1 and the tip of the nozzle 50 of droplet supply unit 40 more accurately during ejection of droplets by previously setting the number of dents 3 detecting the light emitted from the light-emitting slit 502 of one nozzle 50 (by setting the threshold level in light intensity for determining whether the photoelectric conversion unit 70 of dent 3 detects the light or not). For example, as shown in figure 5A, it is possible to determine the height of the tip of the nozzle 50 of droplet supply unit 40, based on the number of dents 3 that detects the light from the light-emitting slit 502 during movement of the droplet supply unit 40 relative to the sample-loading face F1 in the vertical and parallel directions. When the tip of nozzle 50 is significantly separated from the sample-loading face F1, the number of the dents 3 detecting the emission light increases [dents 3 receiving the light are indicated by diagonal lines in figure 5A]. As the tip of nozzle 50 is brought closer to the sample-loading face F1, the number of dents 3 detecting the emitted light decreases gradually. As shown in figure 5B, the light is detected only by cone light-receiving zone finally. At that time, the height of the nozzle can be determined. The distance between the surface and the tip of nozzle 50 can be determined not only when the light is detected only by a single light-receiving zone but by other methods. The distance can be freely determined by setting the number of dents 3 detecting the emitted light from one nozzle 50 in advance and storing the data in the memory unit 5.

Alternatively, by making the photoelectric conversion unit 70 of dent 3 capable of detecting the difference in intensity of the light emitted from the light-emitting slit 502 of nozzle 50, the height can be determined by the intensity of the light detected by each dent 3. For example, by setting the intensity of the light detected by a dent 3 when the tip of nozzle 50 is at a suitable position, the tip of nozzle 50 may be controlled to come closer to the sample-loading face F1 if the light detected is lower than the set intensity, and to be separated from the sample-loading face F1 when the detected light intensity is larger than the set intensity. The position of the droplet supply unit 40 is fixed when the intensity becomes identical with the set strength.

Another example of the configuration of the droplet supply unit 40 is shown in Figure 6A. As shown in Figure 6A, a nozzle 50A of droplet supply unit 40 has an injection hole 701, a light-emitting hole 702 for positioning, and a light-receiving zone 703 receiving the light from the light-emitting hole 702 on its tip surface. As shown in the perspective view of Figure 6B, the substrate 1 has a reflector 71, for example, of aluminum, reflecting the emission light from the light-emitting hole 702 at least at one site on the sample-loading face F1.

The operation of the droplet supply unit 40 will be described below. When the tip of nozzle 50A comes to the position above the reflector 71, the emission light from the light-emitting hole 702 is reflected by the reflector 71. The light-receiving zone 703 on the tip of nozzle 50A detects the reflected light. In this manner, it becomes possible to adjust the position of the droplet supply unit 40 before ejection of droplets. By previously setting the distance from the

reflector 71 to the dent 3 to which a droplet is ejected, it becomes possible to move and control the position of the droplet supply unit 40 based on the data. In this manner, it is possible to adjust the position of the droplet supply unit 40 relative to the dent 3 to which a droplet is ejected very accurately.

Favorable embodiments of the present invention are so far described in detail, but the present invention is not restricted to the embodiments above.

For example, in the sample-analyzing devices 100, 101 and 102 of the embodiments described above, one photoelectric conversion unit 70 having one photoelectric conversion element (photodiode) is described, but the present invention is not restricted to these embodiments. Namely, in the present invention, one photoelectric conversion unit may have only a photoelectric conversion element or two or more photoelectric conversion elements.

In addition, in the sample-analyzing devices 100, 101 and 102 of the embodiments described above, the photoelectric conversion element placed in the photoelectric conversion unit 70 is a photodiode, but the present invention is not restricted to these embodiments. Thus, in the present invention, the photoelectric conversion element for the photoelectric conversion unit is not particularly limited if it receives the light emitted from the droplet immobilized in a dent and generates electrons by photoelectric conversion of the light (e.g., that having a pn-junction or a pin junction). The photoelectric conversion element may be, for example, a phototransistor, an avalanche photodiode, a CdS cell, or a photo IC instead of a photodiode. Alternatively, the photoelectric conversion element may be a solar cell (including a dye-sensitizing solar cell).

In addition, the photoelectric conversion unit described above having two or more photoelectric conversion elements has, for example, a configuration wherein multiple photoelectric conversion elements described above are arranged two-dimensionally. An example of such a photoelectric conversion unit is an image sensor. More specific examples of the image sensors include CCD (Charge Coupled Device) sensors, MOS (Metal Oxide Semiconductor) sensors, and the like. These are grouped based on the method of read out.

Still more specific examples thereof include IT-CCD (Inter Transfer-Charge Coupled Device) sensors, FT-CCD (Flame Transfer-Charge Coupled Device) sensors, FIT-CCD (Flame Inter Transfer-Charge Coupled Device) sensors, CMOS (Complementary-Charge Coupled Device) sensors, NMOS (N-Channel-Charge Coupled Device) sensors, and PMOS (p-Channel-Charge Coupled Device) sensors. Further, one photoelectric conversion unit may have a plurality of image sensors. For prevention of dark current generation and more reliable detection of faint emission light, the sensor described above may be cooled.

In addition, the sample-analyzing device according to the present invention may not be the device like the sample-analyzing device 102 shown in Figure 7 wherein a CPU 4, a memory unit 5 and a data input/output unit 6 are placed on a same substrate 1 integrally as shown by the sample-analyzing device 100 in Figure 1. Alternatively, the device may have at least one of the CPU 4, the memory unit 5 and the data input/output unit 6 integrally place on a substrate 1.

In addition, among the elements in the substrate 1 shown in Figure 2, all of the p-type semiconductor elements may be replaced with n-type semiconductor elements and all of the n-type semiconductor elements with p-type semiconductor elements at the same time.

In the present invention, the substrate having a sample-loading face is not particularly limited, if it has a configuration having two or more dents formed with an organic molecular film on the sample-loading face, photoelectric conversion units respectively for respective dents, and a mechanism of outputting electrical signals as analytical information based on the charges generated in the photoelectric conversion element in photoelectric conversion unit. The invention is not limited to the semiconductor integrated circuit substrates 1 used in the sample-analyzing devices 100, 101 and 102 of the embodiments above.

For example, in the semiconductor integrated circuit substrates 1 used in the sample-analyzing devices 100, 101 and 102, a signal detection transistor circuit that transforms the electrons (charges) generated by photoelectric conversion of light in the photodiode into voltage information was used as the mechanism for outputting the electrical signal based on the charges generated in the photoelectric conversion element as analytical information, but the substrate according to the present invention is not restricted to the configuration that has a signal detection transistor circuit favorable for photodiode, MOS sensor, or the like.

The sample-analyzing device according to the present invention may have a configuration wherein at least one component of substrate 1, i.e., a light-shielding film 15, an interlayer insulation film 9 or a color filter 11, is eliminated among the elements in the substrate 1 shown in Figure 2. Alternatively, the sample-analyzing device may not have a color filter 11 or a protective layer 12. In such a case, the top layer is not a protective layer 12 but a layer placed atop the substrate 1. (e.g., an insulation film 10, an interlayer insulation film 9, or, an inorganic oxide layer 8.)

In addition, in the sample-analyzing device according to the present invention, the bottom face of dent may be additionally coated with a second film made of a light-permeable material. In such a case, a hydrophilic fourth functional group that can at least form a hydrogen bond with the solvent contained in the droplets is bound onto the surface of the second film. Because the droplets are held selectively on the surface of the second film by forming a hydrogen bond with the fourth functional group, the advantageous effects of the invention are preserved even in such

a case. However, in such a case, the thickness of the second film is not larger than that of the organic molecular film covering the first area.

The material for the second film is not particularly limited if it allows transmission of the light emitted from the droplet stored in the dent 3, has a fourth functional group forming a hydrogen bond with the droplets, and is capable of forming a covalent bond with the first functional group on the sample-loading face F1 of substrate 1 in a condensation reaction.

For obtaining the advantageous effects of the invention more reliably, the fourth functional group preferably has at least one structure selected from the group consisting of -OH, $-NH_2$, =N-H, -SH, $-SO_3H$, $-SO_2H$, $-PO_3H$, $-PO_3H_2$, -CHO, and $-CO_2H$.

The fourth functional group may have a (M-O-M) structure wherein metal atoms (metal ions) M are bound to each other via oxygen, a metal oxide structure (M=O), or a metal hydroxide structure (M-O-H) instead of the structure described above. In addition, the probe described above may be immobilized on the surface of the second film.

The material for the second film is preferably an organic molecule having the fourth functional group described above at one end of the chain, having the second functional group described above (that is capable of binding to the first functional group in a condensation reaction) at the other end of the chain, and having the bivalent organic group represented by Formula (2) described above bound between the fourth and second functional groups.

The material for the second film preferably has a structure having at least one bivalent functional group selected from the group consisting of the functional groups represented by Formula (3) described above, -O-, -COO-, and $-C_6H_4-$ between the carbon atoms constituting the carbon main skeleton of the bivalent organic group represented by the Formula (2).

The material for the second film is preferably an organic molecule with a structure having a functional group represented by General Formula (1) that is capable of binding to the first functional group in a condensation reaction as the second functional group, having two monovalent groups selected from the group consisting of a methyl group, halogen-substituted methyl groups, a vinyl group, cyclic ether groups having 2 to 4 carbons, a phenyl group, halogen-substituted phenyl groups, and a cyano group as the fourth functional group, and having a trivalent organic group represented by Formula (4) described above bound between the two second functional groups and the fourth functional group structure.

EXAMPLE

Hereinafter, the present invention will be described in detail with reference to EXAMPLEs, but it should be understood that the present invention is not limited by these EXAMPLEs at all.

<Preliminary experiment for confirming organic molecular film>

An experiment for confirming an organic molecular film formed on a substrate was conducted by using an organic molecule used in EXAMPLE 1, $CF_3(CF_2)_7(CH_2)_2SiCl_3$ (manufactured by Shin-Etsu Chemical Co., Ltd.). An aluminum-deposited glass substrate was used in infrared spectroscopic analysis and a glass substrate in other analyses.

A 2-wt % organic molecule-containing solution was prepared by dissolving $CF_3(CF_2)_7(CH_2)_2SiCl_3$ in a hydrofluoroether (trade name: "HFE-7200", manufactured by Sumitomo 3M). Each substrate was immersed in the solution for 15 minutes. After immersion, the substrate was removed from the solution and immediately washed with fresh hydrofluoroether for removal of excessive $CF_3(CF_2)_7(CH_2)_2SiCl_3$ and others remaining on the substrate surface. Then, each substrate was dried in air for removal of the washing hydrofluoroether remaining on the substrate. The operations from preparation of the organic molecule-containing solution to drying of the substrate were carried out under a dry atmosphere in a glove box supplied with a dry nitrogen gas. The water content in the gas phase inside the glove box (nitrogen gas atmosphere), when it was expressed by relative humidity at 22°C, was adjusted to a relative humidity of 5% or lower.

By the operations above, a condensation reaction (dehydrochlorination reaction) between the hydroxyl and silanol groups on the primary faces of each substrate and the trichlorosilyl group ($-SiCl_3$) at the terminal of $CF_3(CF_2)_7(CH_2)_2SiCl_3$ (organic molecule) was allowed to proceed in the organic molecule-containing solution.

The organic molecular film formed was analyzed by using the following infrared spectroscopic analyzer, nuclear magnetic resonance equipment, organic mass spectrometer, secondary-ion mass spectrometer, X ray photoelectron spectrometer, X ray reflectometer, and transmission electron microscope.

[Infrared spectroscopic analysis]

Infrared spectroscopic analysis was performed in a Fourier infrared analyzer (Magna550, manufactured by

Thermo Electron Corporation) in the high-sensitivity reflection measurement mode. As shown in Figure 12, asymmetric stretching vibration of methylene group was observed at a wavenumber of 2,930 $cm^{-1}$. In addition, symmetrical stretching vibration of methylene group was observed at a wavenumber of 2,888 $cm^{-1}$. The results indicated presence of a $CH_2$ group in the organic molecular film.

[$^1$H-Nuclear magnetic resonance analysis]

$^1$H-Nuclear magnetic resonance analysis was performed by using a nuclear magnetic resonance instrument (UNITY INOVA 600, manufactured by Varian, Inc.) that allowed a trace analysis by using a nanoprobe. The measurement sample was prepared by polishing the substrate above carrying a formed organic molecular film with an aluminium oxide abrasive, adding deuterated methanol and sodium hydroxide to the powder thus obtained, and heating the mixture until the organic molecular film component from the substrate is dissolved. As shown in Figure 13, signals having integrated intensities of 2H respectively at 0.72 and 2.35 ppm were observed. These signals were assigned respectively to be $CH_2$ next to Si and $CH_2$ next to a $CF_2$ group. The results confirmed presence of $-CH_2CH_2-$ in the organic molecular film.

[$^{19}$F-Nuclear magnetic resonance analysis]

In a similar manner to above, $^{19}$F nuclear magnetic resonance analysis was performed in a nuclear magnetic resonance instrument (UNITY INOVA 600, manufactured by Varian, Inc.) that allowed trace analysis by using a nanoprobe. The sample was prepared in a similar manner to the $^1$H-NMR, measurement. As shown in Figure 14, a signal having an integrated intensity of 2 F was observed at -126.5 ppm; signals each having an integrated intensity of 2F at -123.5 ppm, -123.0 ppm and -121.9 ppm; a signal having an integrated intensity of 4F, at -122.2 ppm; a signal having an integrated intensity of 2F, at -116.2 ppm ; and a signal having an integrated intensity of 3F, at -81.6 ppm. These signals were assigned respectively to $CF_2$ next to a $CF_3$ group, $CF_2CF_2CF_2CF_2CF_2$, $CF_2$ next to $CH_2$, and $CF_3$, which confirmed the presence of $CF_3(CF_2)_7CH_2$- in the organic molecular film.

[Organic mass spectrometry]

The surface of a substrate carrying a formed organic molecular film was analyzed by organic mass spectrometry in a time-of-flight secondary-ion mass spectrometer (TRIFT-II time-of-flight secondary-ion mass spectrometer, manufactured by PHI-CFAa. As a result, as shown in Figure 15, positive ions having mass numbers of 31, 69, 119, and 169 were observed. These ions with respective mass numbers are assigned to be respectively, $CF^+$, $CF_3^+$, $C_2F_5^+$, and $C_3F_7^+$. In addition, as shown in Figure 16, negative ions having mass numbers of 19, 38, 69, 119, and 169 were observed. The ions with the mass numbers are assigned to be respectively, $F^-$, $F_2^-$, $CF_3^-$, $C_2F_5$-; and $C_3F_7^-$, which confirmed presence of $CF_3CF_2CF_2$- in the organic molecular film.

[X-ray photoelectron spectroscopy]

In addition, the C1s binding energy of an organic molecular film was determined by using an X ray photoelectron spectrometer (SSX-100, manufactured by SSI). As shown in Figure 17, peaks at 285.8eV, 287.3eV, 289.2eV, 291.1eV, 292.5eV, and 294.9eV were observed. The energy values corresponded respectively to $CH_x$ (+$SiCH_x$), $CF_2CH_2$, CF, $CF_2CH_2$, $CF_2CF_2$, and $CF_3$. These peaks were found to be the fragments derived from the organic molecule, $CF_3(CF_2)_7(CH_2)_2SiCl_3$.

[Film thickness analysis]

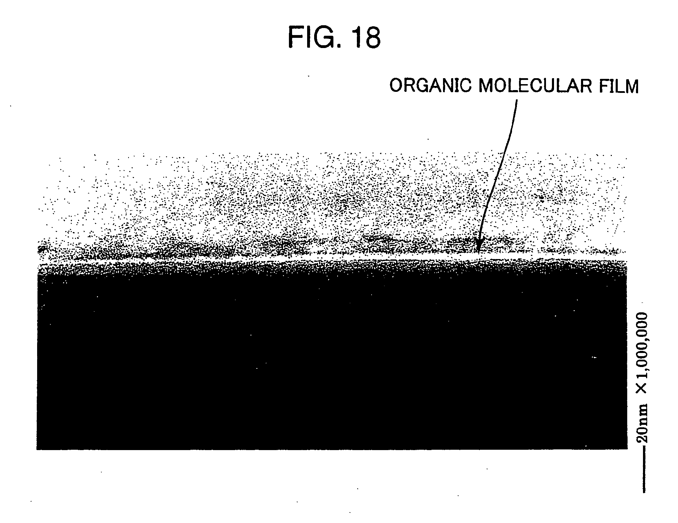

The thickness of the organic molecular film formed on a substrate was determined by using an X ray reflectometer (manufactured by Rigaku Corporation). As a result, the thickness was 2.26 nm. After an epoxy resin was coated on the substrate carrying the organic molecular film formed, the cross section thereof was observed by using a transmission electron microscope (H-9000UHR, manufactured by Hitachi Ltd.). As shown in Figure 18, the thickness of the organic molecular film formed on a substrate was determined from the image. As a result, the thickness was 2 to 2.5 nm.

From these results, it was confirmed that the film formed on the substrate had a shape like an organic molecular film wherein the organic molecules are aligned densely with a thickness of about a single molecule on the substrate.

<EXAMPLE 1.>

A sample-analyzing device having a configuration similar to the inspection equipment 102 shown in Figure 7 was prepared according to the procedures described below with reference to Figures 8 to 10.

A substrate 81 having a configuration similar to the substrate 1 shown in Figure 2 obtained by using semiconductor thin film-manufacturing technology (semiconductor integrated circuit substrate, the size of primary face: 15 mm × 25 mm, thickness: 0.8 mm, the number of photodiodes two-dimensionally arranged at the same interval: 120,000 pieces, and density of the photodiodes arranged two-dimensionary at the same interval: 37,000/$cm^2$) was prepared.

Then, according to the organic molecular film-forming process of the present invention, an organic molecular film 83 was formed on the primary face of substrate 81 (sample-loading face) in the following steps.

First, the primary face of substrate 81 was washed with ultrapure water and dried with hot air for removal of the droplets of ultrapure water attached on the surface. Then, a positive resist (trade name": OFPR5000", manufactured by Tokyo Ohka Kogyo Co., Ltd.) was coated on the primary face of the substrate 81 by using a spinner, and a mask pattern (having a pattern corresponding to the location of the photodiodes in the substrate 81) was place on the coated surface.

Then, a resist pattern based on the mask was formed on the primary face of substrate 81 shown in Figures 8A and 8B by irradiating an ultraviolet light on the coated surface by using a stepper (projection exposure equipment) and then developing and cleaning the resulting surface. Figure 8A is a schematic cross sectional view illustrating the resist pattern, and Figure 8B is a microphotogram of the resist pattern shown in Figure 8A when observed in the direction normal to the primary face of substrate 81.

A plurality of rectangular patterns shown in Figure 8B are the resist patterns 82, and the size was 60 μm in length and 20 μm in width. The area on the primary face of substrate 81 where no resist pattern 82 is formed is the range that becomes the first area (area where the organic molecular film is to be formed), and the area where the resist pattern 82 is formed is the area that becomes the second area (bottom face of dent).

Separately, a 2-wt % organic molecule-containing solution was prepared by dissolving $CF_3(CF_2)_7(CH_2)_2SiCl_3$ (manufactured by Shin-Etsu Chemical Co., Ltd.) as the organic molecule in hydrofluoroether (trade name: "HFE-7200", manufactured by Sumitomo 3M). The substrate 81 carrying the resist pattern 82 formed was immersed in the solution for 15 minutes. After immersion, the substrate 81 was removed from the solution and immediately washed with hydrofluoroether for removal of the excessive $CF_3(CF_2)_7(CH_2)_2SiCl_3$ and others remaining on the substrate 81 surface. Then, the substrate 81 was dried in air for removal of the hydrofluoroether for washing remaining on the substrate 81. The operations from preparation of the organic molecule-containing solution to drying of the substrate were carried out under a dry atmosphere in a glove box supplied with a dry nitrogen gas. The water content in the gas phase in the glove box (nitrogen gas atmosphere), when it was expressed by relative humidity at 22°C, was adjusted to a relative humidity of 5% or lower.

By the operations above, a condensation reaction (dehydrochlorination reaction) between the hydroxyl and silanol groups on the primary faces of substrate 81 and the trichlorosilyl group ($-SiCl_3$) at the terminal of $CF_3(CF_2)_7(CH_2)_2SiCl_3$ (organic molecule) was allowed to proceed in the organic molecule-containing solution. As a result, as shown in Figure 9A, an organic molecular film 83 firmly connected via siloxane bonds (-SiO-) was formed on the area on the primary face of substrate 81 where the resist pattern 82 was not formed.

Then, the substrate 81 carrying the formed organic molecular film 83 was removed from the glove box, and the primary face of substrate 81 was observed under microscope. As shown in the microphotogram of Figure 9B, an organic molecular film 83 was confirmed to be formed on the area where no resist pattern 82. It was further confirmed from the microscopic observation that the resist pattern 82 retained the state immediately after formation, without exfoliation, partial loss, swelling, or the like.

Further, the substrate 81 was immersed in acetone (manufactured by Kanto Kagaku), and the resist pattern 82 on the primary face of substrate 81 was removed by dissolving it in acetone (see, Figure 10). Then, the substrate 81 was washed with ultrapure water and dried. The primary face of substrate 81 after drying was observed under microscope. Results of the microscopic observation confirmed that the resist pattern 82 was completely removed from the surface of substrate 81, i.e., that the area where the resist pattern 82 was formed exposed the surface of the substrate 81 and the substrate 81 carrying the organic molecular film 83 formed on the surface of other areas was obtained.

In addition, the results of microscopic observation confirmed that the bottom face of each dent formed on the primary face of substrate 81 had a size of approximately 20 μm × approximately 60 μm and a total of 120,000 dents, i.e., 37,000 dents per unit area (1 $cm^2$) of the primary face of substrate 81 (volume: $1.2 \times 10^{-3}$ pL), were formed.

Subsequently, after dropping a liquid onto the substrate 81 prepared in this manner, it was examined whether it was possible to prevent contamination between the droplets stored in respective dents sufficiently.

First, an aqueous 2-wt % sodium chloride solution was coated over the entire primary face of substrate 81 carrying an organic molecular film 83 formed, filling the droplets of the aqueous sodium chloride solution 84 in respective

dents (9 pL, height: approximately 10 μm) (see, Figure 11A). Then, after the substrate 81 was dried, the primary face of substrate 81 was observed under microscope. The resulting microphotogram is shown in Figure 11B. As apparent from the results shown in Figure 11B, columnar sodium chloride crystals 85 (size of bottom face: approximately 20 μm ×approximately 60 μm) are present only in the dents of substrate 81 selectively. It was also confirmed that all sodium chloride crystals 85 were formed only in the dent areas selectively.

Further, a similar confirmation test was performed by using an aqueous DNA solution containing SYBR-Green replacing the aqueous sodium chloride solution. The aqueous DNA solution used was an aqueous solution of a DNA probe (length: 40 bp). As a result, it was confirmed that it was possible to place the microdroplet of the aqueous DNA solution only in the exposed area of the substrate 1 orderly without contamination. It was possible to form DNA probes at a density of 37,000 pieces/$cm^2$.

In the EXAMPLES above, $CF_3(CF_2)_7(CH_2)_2SiCl_3$ was used as the organic molecule, but other organic molecules exemplified above in the present specification can also form a hydrophobic organic molecular film on the substrate in an analogous manner.

As described above, in the present invention, mixing of the droplets stored in different dents can be prevented sufficiently (or contamination is prevented for sure) even when the density of the reaction fields (dents for storing droplets) is increased to 10,000 pieces/$cm^2$ or more by making the distance between neighboring dents extremely smaller. Thus, the sample-analyzing device according to the present invention ensures a sufficiently high analytical accuracy.

In addition, the hydrophobic organic molecular film formed on the sample-loading face, which is easily formed and has a uniform thickness, reduces the fluctuation in the capacity of dents sufficiently and easily makes the capacity of respective reaction fields (dents for storing droplets) more uniform. As a result, the sample-analyzing device according to the present invention ensures a sufficiently high analytical accuracy.

In the present invention, because the first and second areas on the sample-loading face are divided according to the fine two-dimensional location pattern of the photoelectric conversion units inside the substrate, it is possible to form an organic molecular film only on the first area selectively. Accordingly, it is possible to form dents easily on the sample-loading face two-dimensionally in an extremely fine pattern. Thus, it becomes possible to make the photoelectric conversion unit detect the light-emitting reactions occurring in the droplets stored in respective dents efficiently.

According to the sample-analyzing device of the present invention, dents having an extremely smaller capacity are formed at an extremely higher density on a sample-loading face, allowing miniaturization of the reaction fields and increase in density of the dents (in particular, reduction of the capacity of a reaction field to 1,000 pL or less and increase of the density of reaction fields to 10,000 pieces/$cm^2$ or more) easily and reliably. The sample-analyzing device according to the present invention also assures a sufficiently high analytical accuracy. The sample-analyzing device according to the present invention additionally enables analysis with an extremely small amount of sample and thus reduction of analysis cost. Because of the dents formed at high density, the sample-analyzing device according to the present invention enables analysis of a large number of samples, multi-item analysis, multiple analyses of the same sample, and the like efficiently at the same time.

The sample-analyzing device according to the present invention has a configuration that allows miniaturization of the reaction fields and increase in density of the dents easily and reliably as described above and thus enables reduction of the device easily.

As described above, in the sample-analyzing device according to the present invention, the organic molecular film is bound to the first area of sample-loading face covalently. For that reason, exfoliation of the organic molecular film is sufficiently prevented even when the sample-analyzing device is used repeatedly over an extended period of time or stored unused over an extended period of time, and thus the sample-analyzing device according to the present invention assures a sufficient high reliability.

Each dent has a configuration consisting of a hydrophobic bottom face (second area) and a surrounding internal side face formed with a hydrophobic organic molecular film (the first area coated with an organic molecular film). As a result, droplets 4 supplied are placed in the dents as they are protruding from the openings almost in the hemispherical shape or almost in the columnar shape having a hemispherical tip atop. Accordingly, the volume of the droplet actually stored in the dent (droplet placed on the bottom face of dent) can be increased to an amount much larger than the geometric capacity of the dent. Thus, it is possible to use droplets in an amount sufficient for providing a reliable analytical sensitivity even when dents with a smaller geometric capacity are formed. Thus, the droplets ejected onto the bottom face of dent are placed in the dents as they are sticking out of the openings almost in the hemispherical shape or almost in the columnar shape having a hemispherical tip atop. As a result, the droplets placed on the bottom face of dent have a shape favorable for collecting light. From this viewpoint too, the sample analyzer according to the present invention assures a sufficiently high analytical sensitivity.

For example, if the bottom face of a dent (second area) is close to circular, a droplet having a height (distance from the bottom face of dent to the top of droplet) almost equivalent to the radius r of the dent can be placed on the bottom face of the dent. The present inventors have found that a droplet having a height of, for example, 1,000 times

or larger than the thickness of the organic molecular film could be placed in a dent [the bottom face of dent (second area)]. The present inventors have found that a droplet, for example, having a height of approximately 10,000 times larger could be placed in a dent [the bottom face of dent (second area)] as described in the EXAMPLE. It was quite difficult to place a sufficient amount of droplets in such an extremely small areas by the configurations of the prior art described above.

For example, Prior Art 3 described above disclosed that it was possible to suppress the incidence of contamination by increasing the height of convex matrix pattern to 1 μm or more (e.g., in Claim 24 and paragraph number 0044 of Prior Art 3). However, the present inventors have found that it is possible to suppress contamination sufficiently even when the thickness of organic molecular film, which corresponds to the height of the convex matrix pattern, is reduced to 50 nm or less in the present invention.

The sample-analyzing device according to the present invention is quite useful, for example, as an analyzer such as DNA chip, DNA microarray, or the like used in various fields including medicine, drug discovery, analysis, and the present invention is also useful as the process of manufacturing such a device.

In the present invention, as described above, the presence of the organic molecular film can be confirmed by various analytical methods for examining the molecule structure, constituent elements, and the like. For example, as described in the EXAMPLE, the presence thereof can be confirmed by using at least one analyzer among many analyzers such as infrared spectroscopic analyzer, nuclear magnetic resonance equipment, organic mass spectrometer, secondary-ion mass spectrometer, X-ray photoelectron spectrometer, X ray reflectometer, and transmission electron microscope.

For miniaturizing the reaction fields (dent for storing droplets) and raising the density thereof, preferably for reducing the capacity of reaction field to 1,000 pL or less, and for increasing the density of reaction fields to 10,000 pieces/$cm^2$ or more, the sample-analyzing device according to the present invention preferably has the following shape: The volume of the droplet stored in a dent is preferably 0.01 to 1,000 pL, more preferably 0.01 to 35 pL, and still more preferably 0.01 pL to 1.2 pL. If the volume of the droplet stored in a dent is less than 0.01 pL, it becomes more difficult to obtain a sufficiently high analytical sensitivity.

Alternatively, if the volume of the droplet stored in a dent exceeds 1000 pL, it becomes more difficult to reduce the size and increase the density of the reaction fields. When the volume of the droplet stored in a dent is in the range of 0.01 to 35 pL, it is much easier to make the density of reaction fields 100,000 pieces/$cm^2$ or more. Alternatively, when the volume of the droplet stored in a dent is in the range of 0.01 pL to 1.2 pL, it is possible to make the density of reaction fields 1,000,000 pieces/$cm^2$ or more, easily.

As described above, the sample-analyzing device according to the present invention enables to reduce the dent capacity (geometric volume) sufficiently smaller than the volume of the droplet stored in a dent. Therefore in the present invention, when the volume of the droplet in a dent is adjusted in the range of 0.01 to 1,000 pL, the capacity of the dent may be significantly reduced from that of the droplet. Specifically in this case, the capacity of a dent is preferably $2\times10^{-6}$ to 1 pL.

From the same viewpoint as above, if the desired volume of the droplet in a dent is 0.01 to 35 pL, the capacity of the dent is preferably $2\times10^{-6}$ to $1\times10^{-1}$ pL. Further, from the same viewpoint as above, if the desired volume of the droplet in a dent is 0.01 to 1.2 pL, the capacity of a dent is preferably $2\times10^{-6}$ to $2\times10^{-3}$ pL and more preferably $2\times10^{-6}$ to $7\times10^{-4}$ pL.

For miniaturizing the reaction fields (dent for storing droplets) and raising the density thereof, the sample-analyzing device according to the present invention preferably has the following shape: The number of dents per unit area formed on the substrate surface is preferably 10,000 /$cm^2$ or more for minitualization and high-density packing of reaction fields (droplets in dents) and for controlling the volume of the reaction field preferably at 1,000 pL or less and the density of reaction fields at 10,000 /$cm^2$ or more.

In the present invention, the "unit area of substrate surface" used in defining "the number of dents (liquid-storing areas) per unit area formed on the substrate surface" is a value calculated from the sum of the area of dent bottom faces and the area coated with an organic molecular film layer on the substrate surface. Accordingly, if areas other than the first and second areas are formed on the sample-loading face, the "unit area of substrate surface" is calculated from the sum of the first and second areas on the sample-loading face excluding these other areas. In this specification, "the number of dents per unit area formed on the substrate surface" is referred to as needed as the "density of the dents on substrate surface".

In the present invention, for making the density of reaction fields 100,000 pieces/$cm^2$ or more, the number of dents per unit area formed on the substrate surface is more preferably 100,000 /$cm^2$ or more from this viewpoint. Further, the number of dents per unit area formed on the substrate surface is still more preferably 1,000,000 /$cm^2$ to 8,000,000 /$cm^2$, for increasing the density of reaction fields to 1,000,000 /$cm^2$ or more.

If the number of the dents formed per unit area on the sample-loading face exceeds 8,000,000 pieces/$cm^2$, the size of the photoelectric conversion units corresponding to respective dents becomes too smaller, lowering the analytical sensitivity of the photoelectric conversion units. Such a smaller photoelectric conversion unit has a greater

rate of dark current generated in the photoelectric conversion unit. In such a case, the volume of the droplet stored in a dent also becomes smaller, leading to decrease in fluorescence emission intensity and in analytical sensitivity and consequently demanding some countermeasures for compensating the decrease in fluorescence such as elongation of the photo-receiving time (analytical time), increase in the frequency of sampling, or the like.

In the present invention, the thickness of the organic molecular film is preferably a thickness that allows miniaturization and increase in density of the reaction fields. The thickness is not particularly limited, if it enables in particular to keep the capacity of the dents on the sample-loading face in the range of 0.01 to 1 pL and to increase the density of the dents formed on the sample-loading face to 10,000 pieces/$cm^2$ or more. The thickness may be considered to be, for example, the size (length) of an organic molecule (single molecule) covalently bound to the sample-loading face. Alternatively, the thickness may be greater than the size of one organic molecule. However, for obtaining the advantageous effects of the invention more securely, the thickness of the organic molecular film is preferably 0.5 to 50 nm, more preferably 0.5 to 10 nm, and still more preferably 0.5 to 5 nm.

More specifically, when the volume of the droplet stored in a dent is 0.01 to 1,000 pL and the density of the dents formed on the sample-loading face is 10,000 pieces/$cm^2$ or more, the dent capacity is preferably $2\times10^{-6}$ to 1 pL, and the area of the bottom face of dent (second area) is preferably 4 to 17,500 $\mu m^2$. The thickness of organic molecular film is preferably adjusted in such a manner that the volume of a dent and the area of bottom face are adjusted in the ranges above.

When the volume of the droplet stored in a dent is 0.01 to 35 pL and the density of the dents formed on the sample-loading face is 100,000 pieces/$cm^2$ or more, the dent capacity is preferably $2\times10^{-6}$ to $1\times10^{-1}$ pL and the area of the bottom face of dent (second area) is preferably 4 to 1600 $\mu m^2$. The thickness of the organic molecular film is preferably 0.5 to 50 nm.

Further, when the volume of the droplet stored in a dent is 0.01 pL to 1.2 pL and the density of the dents formed on the sample-loading face is 1,000,000 pieces/$cm^2$ or more, the dent capacity is preferably $2\times10^{-6}$ to $2\times10^{-3}$ pL and the area of the bottom face of dent (second area) is preferably 4 to 155 $\mu m^2$. The thickness of the organic molecular film is preferably 0.5 to 10 nm. In such a case, the dent capacity is preferably reduced further to $2\times10^{-6}$ to $7\times10^{-4}$ pL. In addition, the area of the bottom face of dent (second area) is preferably in the same range as above, and the thickness of the organic molecular film 0.5 to 5 nm.

In addition, for easier and reliable production of a sample-analyzing device satisfying the condition of the volume of the droplet stored in a dent, the density of the dents formed on the sample-loading face, dent capacity, the area of the bottom face of dent, and the thickness of the organic molecular film described above and thus for obtaining the advantageous effects of the invention more reliably, the following shape is preferred in the present invention: namely, a substrate having a hydrophilic first functional group having at least one structure selected from the group consisting of -OH, $-NH_2$, =NH, and -SH at the terminal binding to an organic molecule is used as the substrate, and an organic molecule having a second functional group that is capable of binding to the first functional group in a condensation reaction at one end of the chain and having a third hydrophobic functional group at the other end of the chain is used as the organic molecule. The organic molecular film is preferably prepared in an organic molecular film-forming process by bringing the organic molecule in contact with the sample-loading face and allowing a condensation reaction between the first and second functional groups to proceed.

Use of a substrate having the configuration described above and an organic molecule having the configuration described above can achieve to produce an organic molecular film extremely thin and uniform in thickness easily and reliably. By forming an organic molecular film in this organic molecular film-forming process, it is possible to form extremely fine reaction fields at high density on the sample-loading face easily and reliably, as described above. The substrate may not have a first functional group in advance on the sample-loading face if it has a configuration that can introduce a first functional group on the sample-loading face. It may be, for example, a substrate having a first functional group introduced on the sample-loading face by surface modification in the organic molecular film-forming process.

Further, the organic molecular film-forming process has a first process wherein an organic molecule-containing solution prepared by adding an organic molecule into an aprotic solvent in a container is brought into contact with the sample-loading face of substrate allowing a condensation reaction to proceed. In the first process, when the water content in the gas phase in contact with the organic molecule-containing solution is expressed by relative humidity at 22°C, the relative humidity is preferably controlled to be 35% or less.

Production of an organic molecular film under the condition of the first process has the following advantages; i.e., that even if the organic molecule that binds to the sample-loading face having the first functional group described above in a condensation reaction is a highly reactive organic molecule that polymerizes easily, it was possible to form an organic molecular film extremely thin and uniform in thickness easily and reliably. The "aprotic solvent" used for the organic molecule-containing solution in the first process is a solvent capable of dissolving or dispersing an organic molecule among many aprotic solvents. However, for easier and more accurate production of an organic molecular film uniform in thickness, the aprotic solvent used in the first process use is preferably a solvent that dissolves the organic molecule.

In the first process, when the water content in the gas phase in contact with the organic molecule-containing solution, as expressed by relative humidity at 22°C, exceeds 35%, a polymerization reaction between organic molecules tends to proceed faster than the condensation reaction between the sample-loading face and the organic molecule during production. As a result, lumps of the polymer produced from the organic molecule grow to the order of micron, making it difficult to produce an organic molecular film extremely thin and uniform in thickness. For obtaining an organic molecular film extremely thin and uniform in thickness further more accurately, the water content in the gas phase, as expressed by relative humidity at 22°C, is more preferably 25% or less and still more preferably 5% or less.

The container used in the first process is preferably a glove box. In the first process, the gas for use as the gas phase of which the water content is adjusted in the range above is preferably at least one gas selected from the group consisting of rare gases and a nitrogen gas. However, air may be used in the first process under the condition that oxidation of the organic molecule or aprotic solvent and oxidative degradation of the organic molecular film are suppressed sufficiently. For example, air may be used by properly adjusting the temperature of the gas phase and organic molecule-containing solution, the concentration of the organic molecule, the contact time between the organic molecule and the substrate, and the like in the first process.

As described above in detail, dents extremely smaller in capacity are formed on a sample-loading face at an extremely high density in the sample-analyzing device according to the present invention. Thus, it is possible to easily and reliably produce a sample-analyzing device that allows miniaturization and increase in density of the reaction fields (in particular, for reducing the capacity of reaction field to 1,000 pL or less, and increasing the density of reaction fields to 10,000 pieces/$cm^2$ or more).

In addition, the sample-analyzing device according to the present invention, which has a configuration in which the peripheral area (the first area) of each dent including its internal side surface is coated with an organic molecular film, reliably prevents mixing among the droplets stored in dents even when the distance between the neighboring dents is made extremely smaller. At that time, because the bottom face of dents (second area) is hydrophilic, the droplets stored in the dents are immobilized on the bottom face of dents via hydrogen bonds more securely. Thus, the sample-analyzing device according to the present invention prevents contamination even when the distance between the neighboring dents is made extremely smaller. As a result, the sample-analyzing device according to the present invention assures a sufficiently high analytical accuracy even when it is miniaturized and increased in density of the reaction fields as described above.

Further, the sample-analyzing device according to the present invention can be miniaturized, as it has a configuration allowing miniaturization and increase in density of the reaction fields easily and reliably as described above. In the sample-analyzing device according to the present invention, the organic molecular film is connected to the first area on the sample-loading face via covalent bonds. For that reason, exfoliation of all or part of the organic molecular film from the substrate can be prevented. Accordingly, the sample-analyzing device according to the present invention provides a sufficiently high reliability even when used or not used over an extended period of time repetition use.

According to the process of manufacturing the sample-analyzing device of the present invention, the sample-analyzing device according to the present invention can be produced easily and reliably.

The sample-analyzing device according to the present invention is useful as an analyzer used in the technical fields that demand analysis of a vast number of samples simultaneously under a variety of reaction conditions, composition conditions, and the like, such as drug screening, gene analysis, protein analysis, 1 base polymorphism detection in the development of medicines. In the present invention described so far in details, all description is provided here only to illustrate the present invention by embodiments, and thus the present invention is not limited thereto. It should be understood that numerous modifications not exemplified here are also possible in the scope of the invention.

This application is based on Japanese Patent Application No.2004-121908 filed on April 16, 2004, the contents of which are hereby incorporated by references.

Sample-analyzing device 100 has a substrate 1 having a sample-loading face F1 having two or more dents 3 each formed for independently storing two or more droplets containing an analyte. The sample-loading face F1 is divided at least into a first area F11 coated with a hydrophobic organic molecular film 2 and two or more second areas F12 of which the inside is not coated with the organic molecular film 2 and the entire peripheral area is surrounded by the first area. Each of the bottom face of the dents 3 constitutes the second area F12 and each of the peripheral area of the dents 3 including its internal side surface is formed with the organic molecular film 2 coating the first area. The organic molecular film 2 is formed by using an organic molecule and bound to the face F1 via covalent bonds.

## Claims

1. A sample-analyzing device, comprising
a substrate having a sample-loading face having two or more dents each formed for independently storing two or more droplets containing an analyte, wherein:

said sample-loading face is divided at least into a first area coated with a hydrophobic organic molecular film and two or more second areas of which the inside is not coated with the organic molecular film and the entire peripheral area is surrounded by the first area;
a bottom face of said dents each constitutes said second area;
each of the peripheral area of said dents including its internal side surface is formed with said organic molecular film coating said first area;
two or more photoelectric conversion units are arranged inside said substrate;
each of said photoelectric conversion units independently allows photoelectric conversion of the lights respectively emitted from said two or more droplets stored respectively in said two or more dents;
said two or more photoelectric conversion units are placed respectively for the two or more dents; and
said organic molecular film is formed by using an organic molecule and bound to the sample-loading face via covalent bonds.

**2.** The sample-analyzing device according to Claim 1, wherein the capacity of said dent is $2\times10^{-6}$ to 1 pL.

**3.** The sample-analyzing device according to Claim 1, wherein the number of the dents formed per unit area of said sample-loading face is 10,000 pieces/$cm^2$ or more.

**4.** The sample-analyzing device according to Claim 1, wherein the thickness of said organic molecular film is 0.5 to 50 nm.

**5.** The sample-analyzing device according to Claim 1, wherein:

said sample-loading face of said substrate has at least one hydrophilic first functional group selected from the group consisting of -OH, $-NH_2$, =N-H, and -SH at the terminal that binds to said organic molecule;
said organic molecule has a second functional group that is capable of binding to the first functional group in a condensation reaction at one end of the chain and a hydrophobic third functional group at the other end of said chain;
said organic molecular film is formed in an organic molecular film-forming process of bringing said organic molecule into contact with said sample-loading face allowing said first functional group and said second functional group to bind to each other in a condensation reaction.

**6.** The sample-analyzing device according to Claim 5, wherein:

said organic molecular film-forming process includes a first process of bringing an organic molecule-containing solution prepared by adding said organic molecule into an aprotic solvent into contact with said sample-loading face allowing the condensation reaction to proceed; and
when the water content in the gas phase in contact with said organic molecule-containing solution in said first process is expressed by relative humidity at 22°C, the relative humidity is 35% or less.

**7.** The sample-analyzing device according to Claim 1, having a configuration wherein: said organic molecule has a functional group represented by the following General Formula (1) as said second functional group that is capable of binding to said first functional group in a condensation reaction;
a functional group selected from the group consisting of a methyl group, halogen-substituted methyl groups, a vinyl group, cyclic ether groups having 2 to 4 carbons, a phenyl group, halogen-substituted phenyl groups, and a cyano group as said third functional group; and
a bivalent organic group represented by the following General Formula (2) is bound between said second and third functional groups:

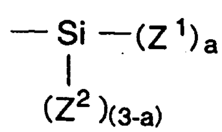
···(1)

$$-C_bE_{2b}- \qquad (2)$$

[in Formula (1), $Z^1$ represents at least one atom or atomic group selected from the group consisting of F, Cl, Br, I, -OH, -SCN, -NCO, and alkoxy groups having 1 to 5 carbons; $Z^2$ represents at least one atom or atomic group selected from the group consisting of H and alkyl groups having 1 to 5 carbons; and a is an integer of 1 to 3; and in Formula (2), E represents at least one atom selected from the group consisting of H and F; and b is an integer of 2 to 22.]

**8.** The sample-analyzing device according to Claim 7, wherein said organic molecule has additionally at least one bivalent functional group selected from the group consisting of functional groups represented by the following General Formula (3), -O-, -COO-, and $-C_6H_4-$ between the carbons constituting the carbon main skeleton of said bivalent organic group represented by General Formula (2):

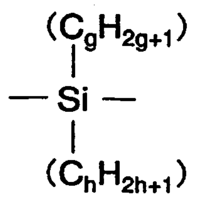 ···(3)

[in Formula (3), g and h each are independently an integer of 1 to 3.]

**9.** The sample-analyzing device according to Claim 5, wherein:

said organic molecule has a functional group represented by the following General Formula (1) that is capable of binding to said first functional group in a condensation reaction as said second functional group;
two or more monovalent groups selected from the group consisting of a methyl group, halogen-substituted methyl groups, a vinyl group, cyclic ether groups having 2 to 4 carbons, a phenyl group, halogen-substituted phenyl groups, and a cyano group as the third functional group; and
a trivalent organic group represented by the following General Formula (4) between said second and third functional groups:

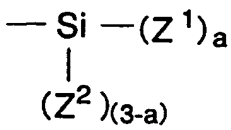 ···(1)

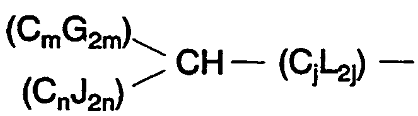 ···(4)

[in Formula (1), $Z^1$ represents at least one atom or atomic group selected from the group consisting of F, Cl, Br, I, -OH, -SCN, -NCO, and alkoxy groups having 1 to 5 carbons; $Z^2$ represents at least one atom or atomic group selected from the group consisting of H and alkyl groups having 1 to 5 carbons; and a is an integer of 1 to 3, and in Formula (4), $C_jL_{2j}$ represents a functional group that binds to said second functional group; $C_mG_{2m}$ and $C_nJ_{2n}$ each are a functional group that binds to said third functional group; G, J, and L may be the same or different from each other and each represent at least one atom selected from the group consisting of H and F; j is an integer of 1 to 18; and m and n each independently are an integer of 0 to 7.]

**10.** The sample-analyzing device according to Claim 7, wherein said organic molecule has a structure represented by any one of the following General Formulae (20) to (29):

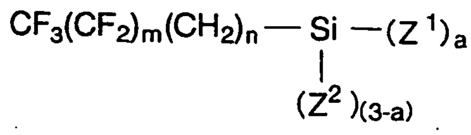

•••(20)

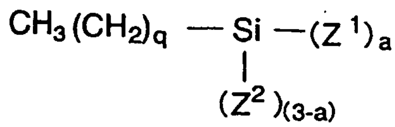

•••(21)

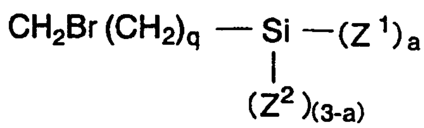

•••(22)

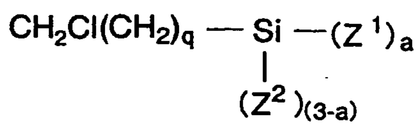

•••(23)

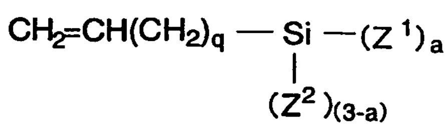

•••(24)

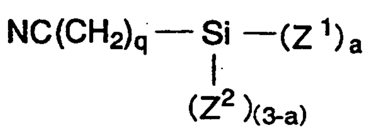

•••(25)

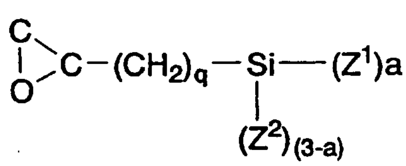

•••(26)

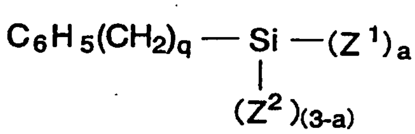

•••(27)

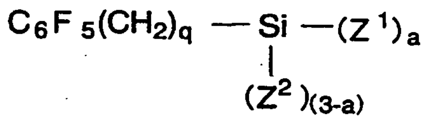 ···(28)

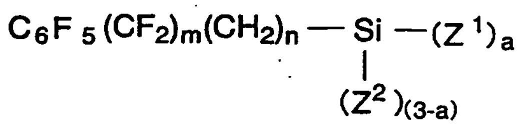 ···(29)

[in Formulae (20) to (29), $Z^1$ represents at least one atom or atomic group selected from the group consisting of F, Cl, Br, I, -OH, -SCN, -NCO, and alkoxy groups having 1 to 5 carbons; $Z^2$ represents at least one atom or atomic group selected from the group consisting of H and alkyl groups having 1 to 5 carbons; a is an integer of 1 to 3; q is an integer of 2 to 22; m and n each satisfy the conditions represented by following formulae (I) to (III):

$$0 \leq m \leq 14 \quad \text{(I);}$$

$$0 \leq n \leq 15 \quad \text{(II);}$$

and

$$2 \leq (m+n) \leq 22 \quad \text{(III);}$$

at the same time.]

**11.** The sample-analyzing device according to Claim 8, wherein said organic molecule has a structure represented by any one of the following General Formulae (30) to (39):

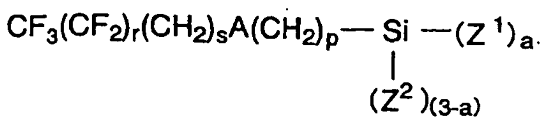 ···(30)

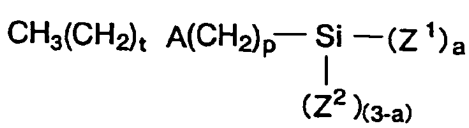 ···(31)

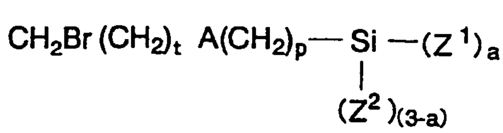 ···(32)

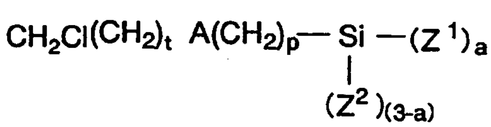 ···(33)

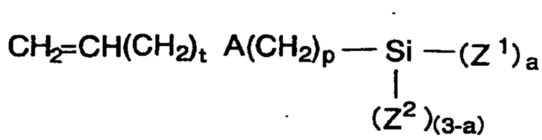 ...(34)

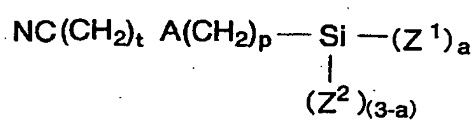 ...(35)

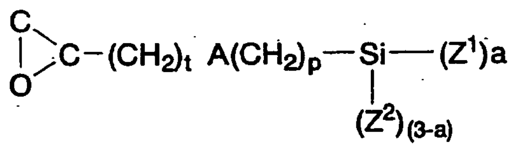 ...(36)

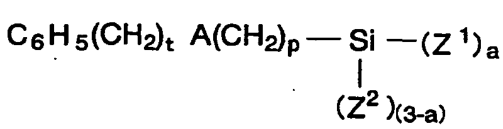 ...(37)

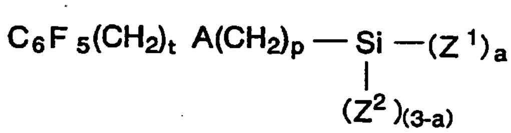 ...(38)

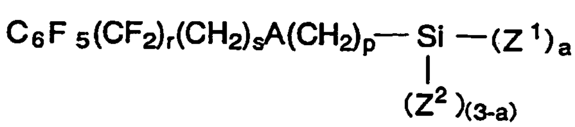 ...(39)

[in Formulae (30) to (39), $Z^1$ represents at least one atom or atomic group selected from the group consisting of F, Cl, Br, I, -OH, -SCN, -NCO, and alkoxy groups having 1 to 5 carbons; $Z^2$ represents at least one atom or atomic group selected from the group consisting of H and alkyl groups having 1 to 5 carbons; a is an integer of 1 to 3; A represents at least one bivalent functional group selected from the group consisting of the functional groups represented by the General Formula (3), -O-, -COO-, and $-C_6H_4-$; t is an integer of 1 to 10; p is an integer of 1 to 18; and r and s each satisfy the conditions represented by the following formulae (IV) to (VI):

$$0 \leq r \leq 14 \quad \text{(IV);}$$

$$0 \leq s \leq 15 \quad \text{(V);}$$

and

$$2 \leq (r+s) \leq 22 \quad \text{(VI);}$$

at the same time. ]

**12.** The sample-analyzing device according to Claim 9, wherein said organic molecule has a structure represented by any one of the following General Formulae (40) to (49):

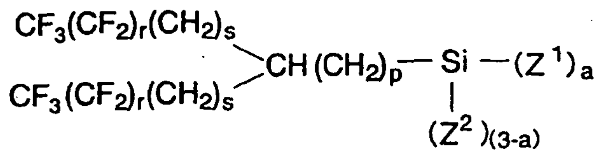

・・・(40)

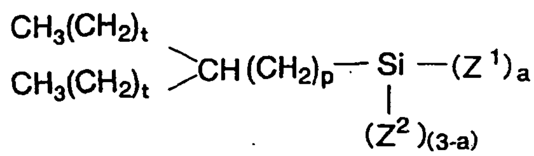

・・・(41)

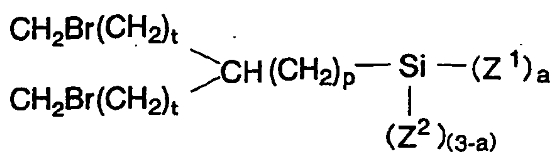

・・・(42)

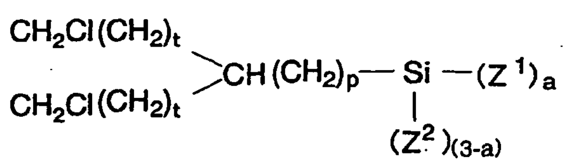

・・・(43)

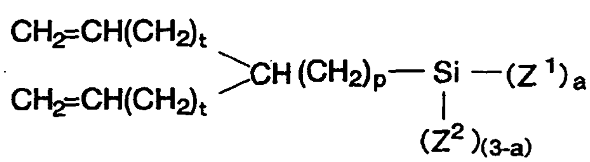

・・・(44)

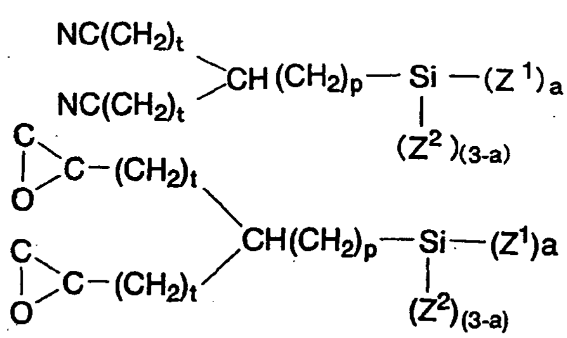

・・・(45)

・・・(46)

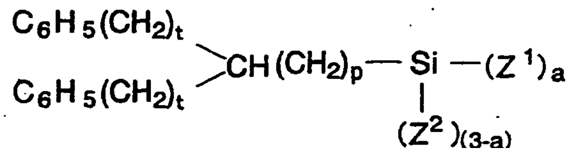 ...(47)

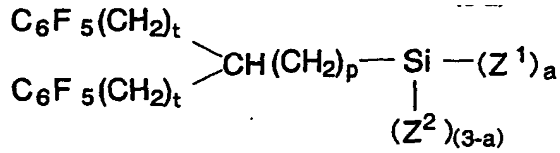 ...(48)

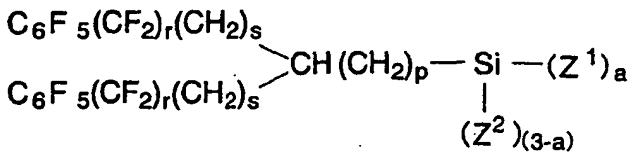 ...(49)

[in Formulae (40) to (49), $Z^1$ represents at least one atom or atomic group selected from the group consisting of F, Cl, Br, I, -OH, -SCN, -NCO, and alkoxy groups having 1 to 5 carbons; $Z^2$ represents at least one atom or atomic group selected from the group consisting of H and alkyl groups having 1 to 5 carbons; a is an integer of 1 to 3; t is an integer of 1 to 10; p is an integer of 1 to 18; and r and s each satisfy the conditions represented by the following formulae (IV) to (VI):

$$0 \leq r \leq 14 \quad \text{(IV);}$$

$$0 \leq s \leq 15 \quad \text{(V);}$$

and

$$2 \leq (r+s) \leq 22 \quad \text{(VI);}$$

at the same time.]

**13.** The sample-analyzing device according to Claim 1, wherein said covalent bond is at least one group selected from the group consisting of -SiO-, -SiN-, and -SiS-.

**14.** The sample-analyzing device according to Claim 5, wherein said first functional group has at least one group selected from the group consisting of $-SO_3H$, $-SO_2H$, $-PO_3H$, $-PO_3H_2$, $-CO_2H$ and -SH.

**15.** The sample-analyzing device according to Claim 1, wherein said droplet contains additionally a probe that reacts with said analyte.

**16.** The sample-analyzing device according to Claim 15, wherein said probe is at least one compound selected from the group consisting of polynucleotides and labeled polynucleotides.

**17.** The sample-analyzing device according to Claim 1, wherein the bottom face of said dents is additionally coated with a second film of a light-permeable material and a surface of said second film has a hydrophilic fourth functional group capable at least of forming a hydrogen bond with a solvent contained in said droplets is bound covalently to the surface of said second film.

**18.** The sample-analyzing device according to Claim 17, wherein said fourth functional group has at least one structure selected from the group consisting of -OH, $-NH_2$, =N-H, -SH, $-SO_3H$, - $SO_2H$, $-PO_3H$, $-PO_3H_2$, -CHO, and $-CO_2H$.

**19.** The sample-analyzing device according to Claim 17, wherein a probe that reacts with the analyte is immobilized on the surface of said second film.

**20.** The sample-analyzing device according to Claim 19, wherein said probe is at least one compound selected from the group consisting of polynucleotides and labeled polynucleotides.

**21.** The sample-analyzing device according to Claim 1, wherein:

said substrate comprises said sample-loading face and a laminated structure comprising a top layer having said sample-loading face that transmits the light emitted from said droplet and a semiconductor layer formed under said top layer that contains said two or more photoelectric conversion units; and
said two or more photoelectric conversion units each have a photoelectric conversion element.

**22.** The sample-analyzing device according to Claim 1, further comprising:

a droplet supply unit placed above said sample-loading face equipped with a nozzle that ejects said analyte-containing droplets into said dent; and
a control unit for adjusting the position of said nozzle relative to said dent by moving said nozzle.

**23.** The sample-analyzing device according to Claim 1, wherein said photoelectric conversion element has a pn-junction face.

**24.** The sample-analyzing device according to Claim 5, wherein said organic molecular film-forming process to form selectively said organic molecular film on the first area, comprising the steps of:

forming a resist pattern on said sample-loading face;
bringing said organic molecule into contact with the sample-loading face having the resist pattern formed;
coating said organic molecular film; and
then removing the resist pattern.

**25.** The sample-analyzing device according to Claim 5, wherein said organic molecular film-forming process to form selectively said organic molecular film on the first area, comprising the steps of

forming said organic molecular film on the sample-loading face;
covering the organic molecular film formed on said sample-loading face with a photomask for selective protection from ultraviolet light;
irradiating the sample-loading face having the organic molecular film formed via said photomask with ultraviolet light; and
removing selectively the organic molecular film.

**26.** A process of manufacturing a sample-analyzing device, comprising:

a substrate-forming process of forming a substrate containing two or more photoelectric conversion units inside in the two-dimensionally arranged state and having at least one hydrophilic first functional group selected from the group consisting of -OH, $-NH_2$, =N-H, and -SH at least on one of the two facing primary faces that becomes a sample-loading face; and
an organic molecular film-forming process forming two or more dents for independently storing two or more droplets containing an analyte that are placed for said two or more photoelectric conversion units respectively by dividing the sample-loading face of the substrate into a first area selectively coated with a hydrophobic organic molecular film and two or more second areas of which the inside is not coated with the organic molecular film and the entire peripheral area is surrounded by the first area, wherein

the organic molecular film is formed by steps of

bringing an organic molecule having a second functional group that is capable of binding to the first functional group in a condensation reaction at one end of the chain and a hydrophobic third functional group at the other end of the chain into contact with said sample-loading face; and
binding said organic molecular film to said sample-loading face covalently by allowing said first functional

group and said second functional group to react in the condensation reaction so that a bottom face of said dents each constitutes the second area and each of the peripheral area of said dents including its internal side surface is formed with said organic molecular film coating said first area.

**27.** The process of manufacturing a sample-analyzing device according to Claim 26, wherein;

said organic molecular film-forming process further include a process of bringing the organic molecule-containing solution prepared by adding said organic molecule into an aprotic solvent into contact with said sample-loading face of the substrate allowing the condensation reaction to proceed; and

when the water content in the gas phase in contact with the organic molecule-containing solution in the first process is expressed by relative humidity at 22°C, the relative humidity 35% or less.

**28.** The process of manufacturing a sample-analyzing device according to Claim 26, wherein said organic molecular film-forming process further includes a process to form said two or more dents, comprising the steps of:

coating on said sample-loading face with a resist pattern; then
bringing said organic molecule into contact with the sample-loading face having the resist pattern formed; and
then removing the resist pattern.

**29.** The process of manufacturing a sample-analyzing device according to Claim 26, wherein the organic molecular film-forming process include a process to form said two or more dents, comprising the steps of:

forming said organic molecular film on said sample-loading face;
covering the organic molecular film on said sample-loading face with a photomask for selective protection from ultraviolet light;
irradiating the sample-loading face having the formed organic molecular film via the photomask with the ultraviolet light; and
removing selectively the organic molecular film.

FIG. 1

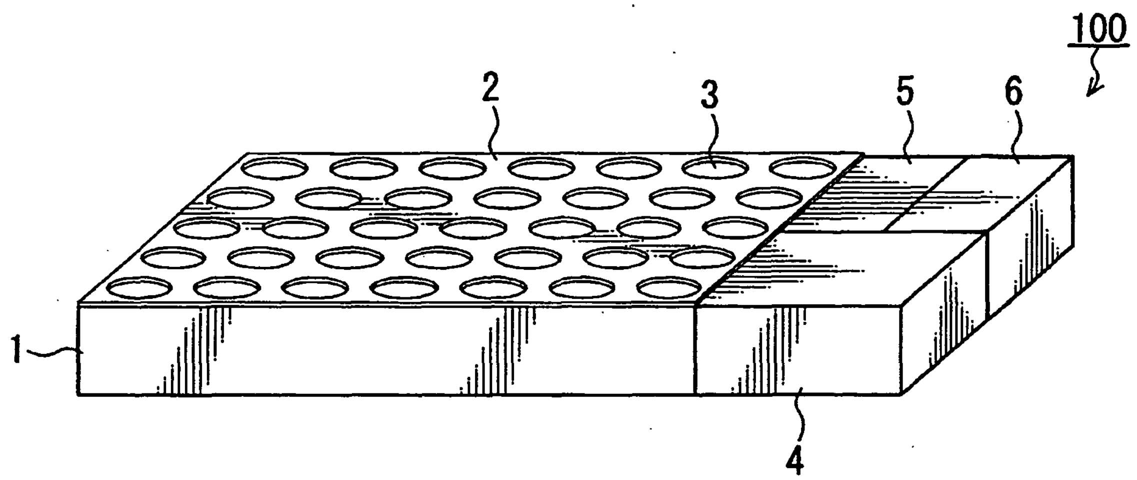

FIG. 2

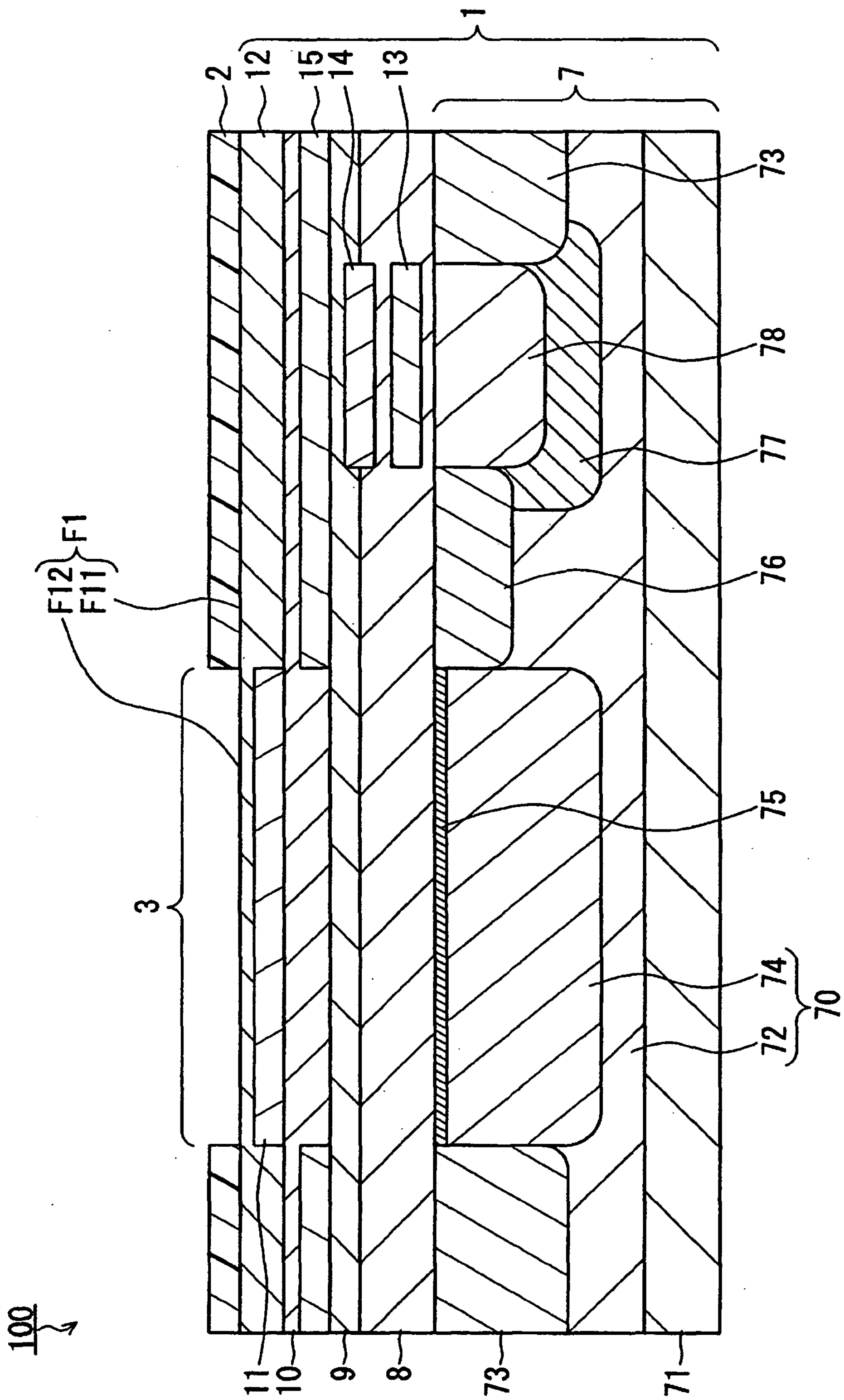

FIG. 3

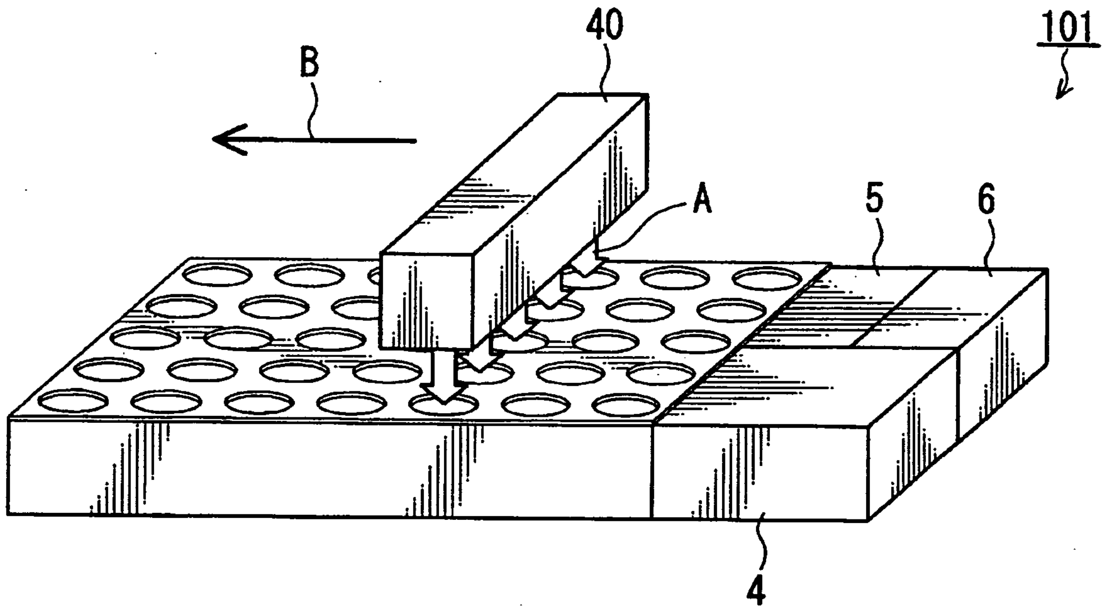

FIG. 4A

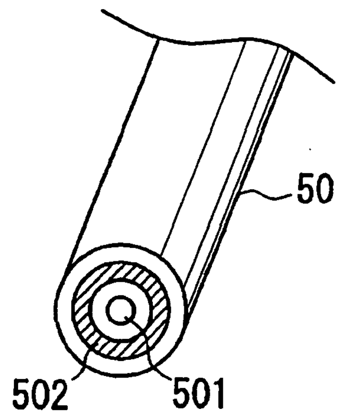


FIG. 4B

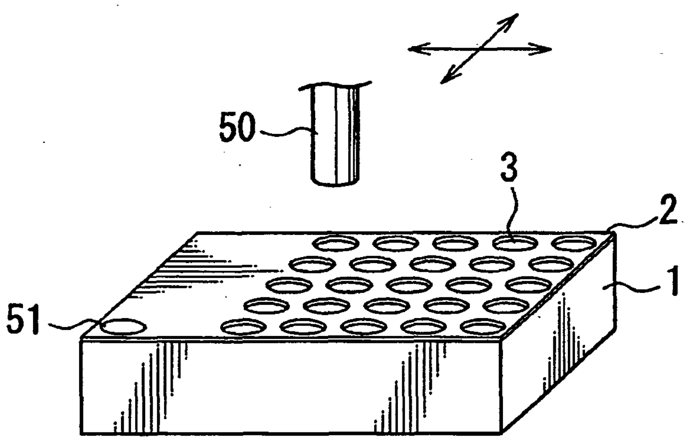


FIG. 4C

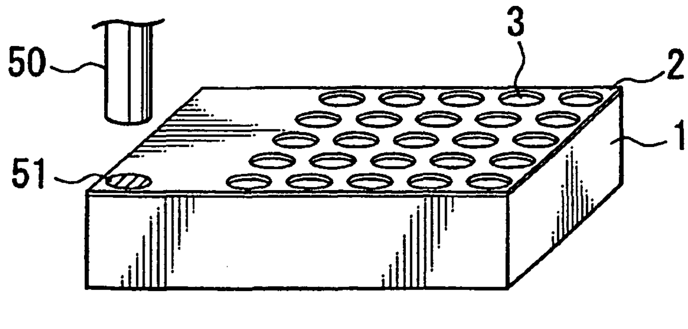

FIG. 5A

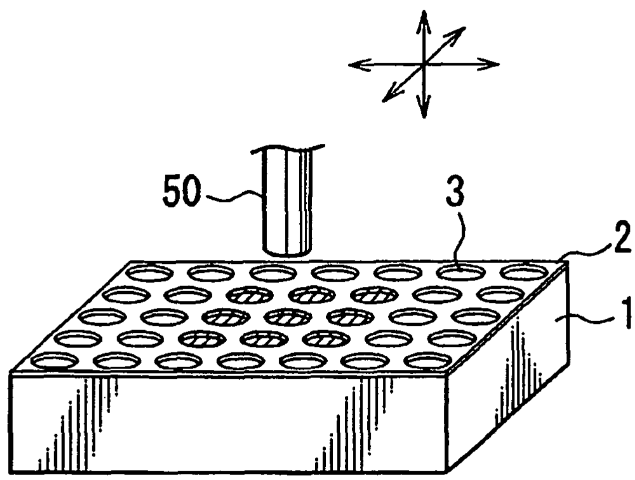


FIG. 5B

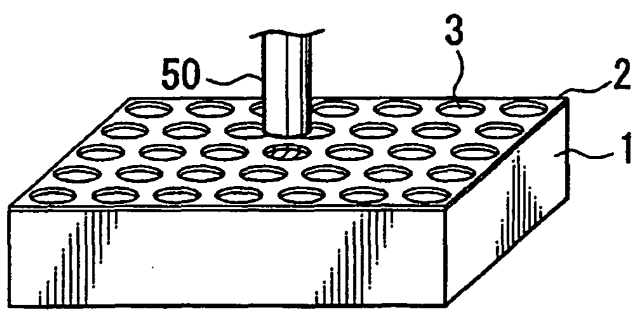

FIG. 6A

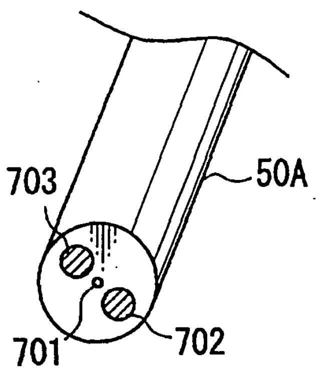


FIG. 6B

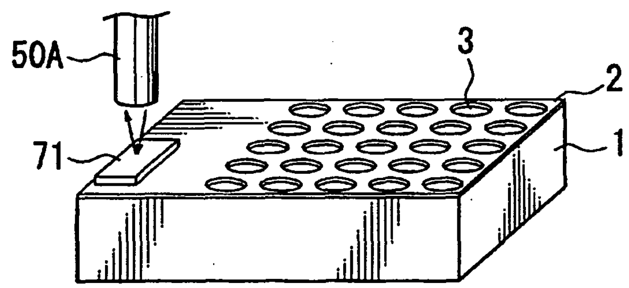


FIG. 7

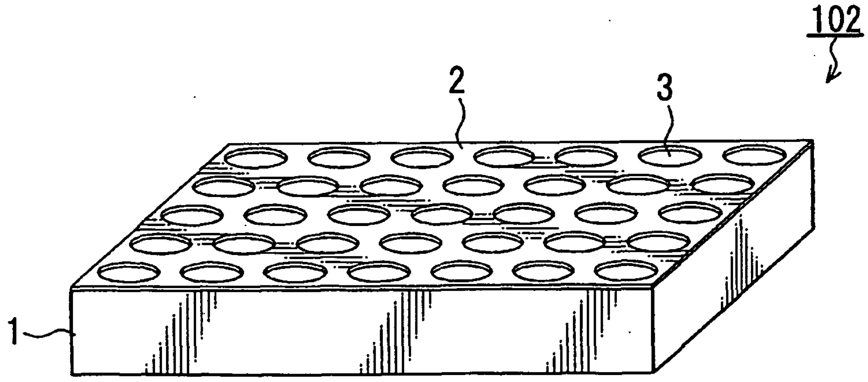

FIG. 8A

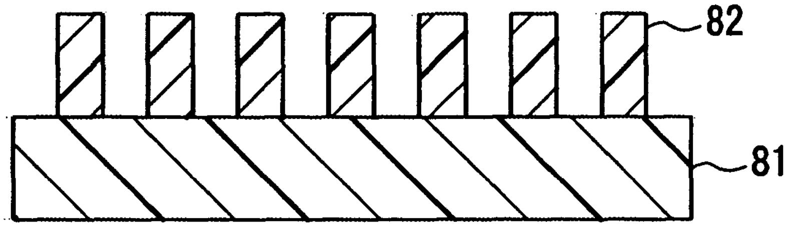


FIG. 8B

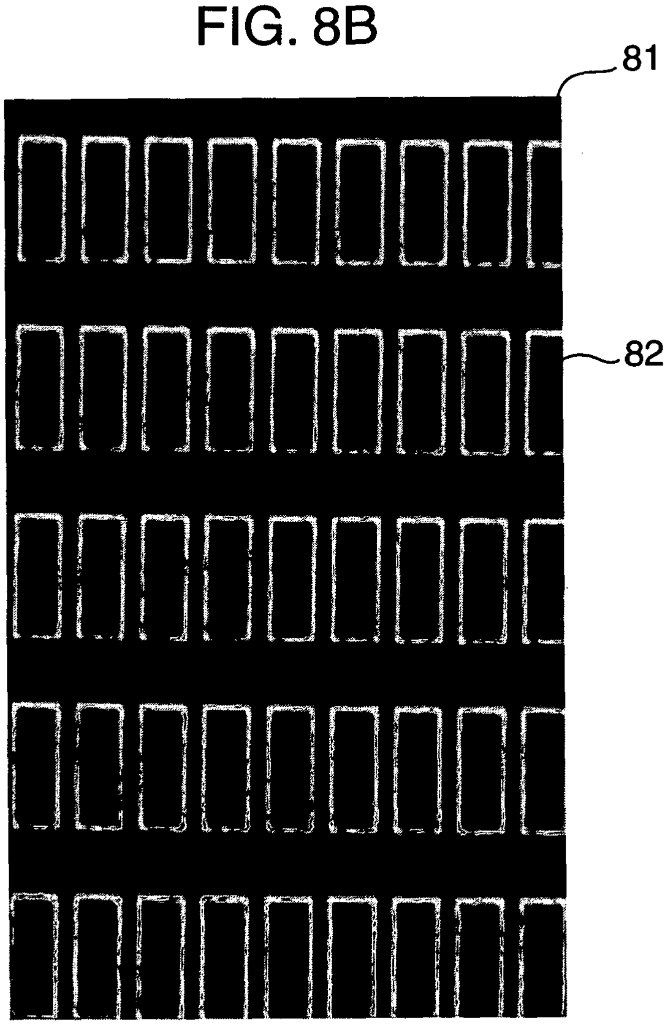

FIG. 9A

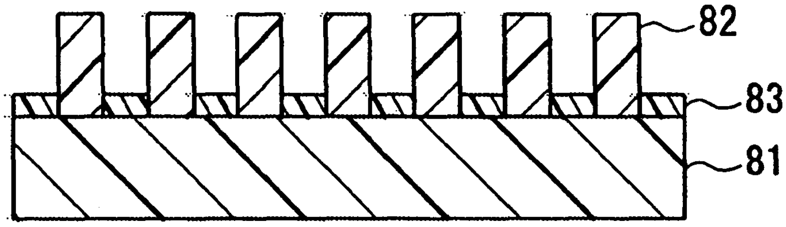


FIG. 9B

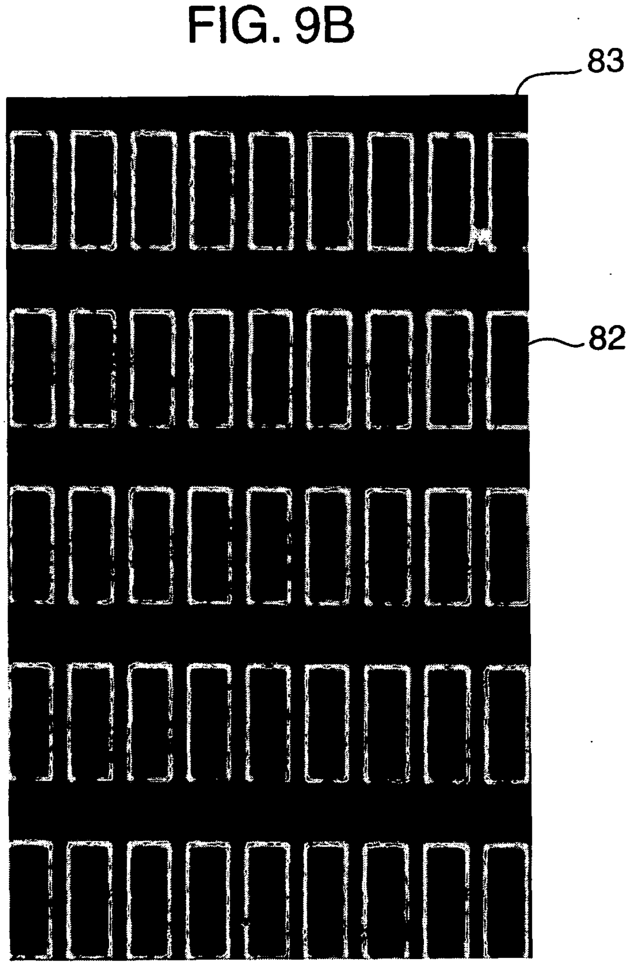


FIG. 10

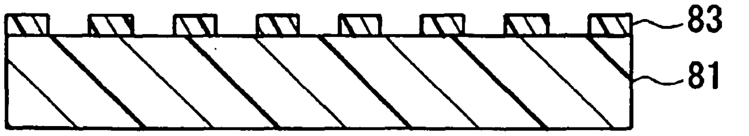

FIG. 11A

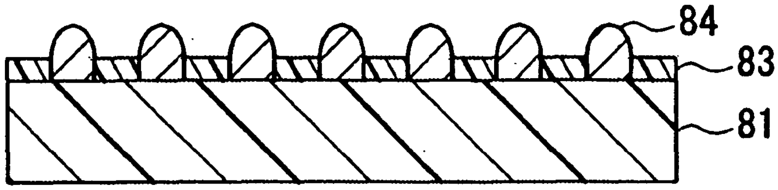


FIG. 11B

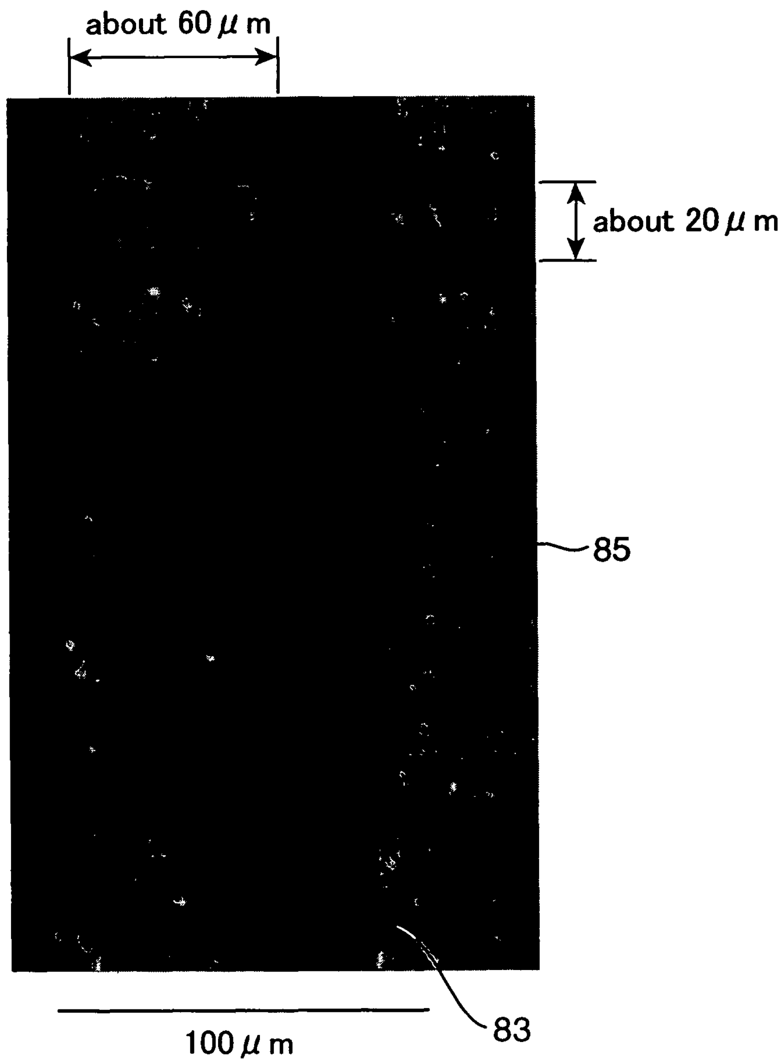

FIG. 12

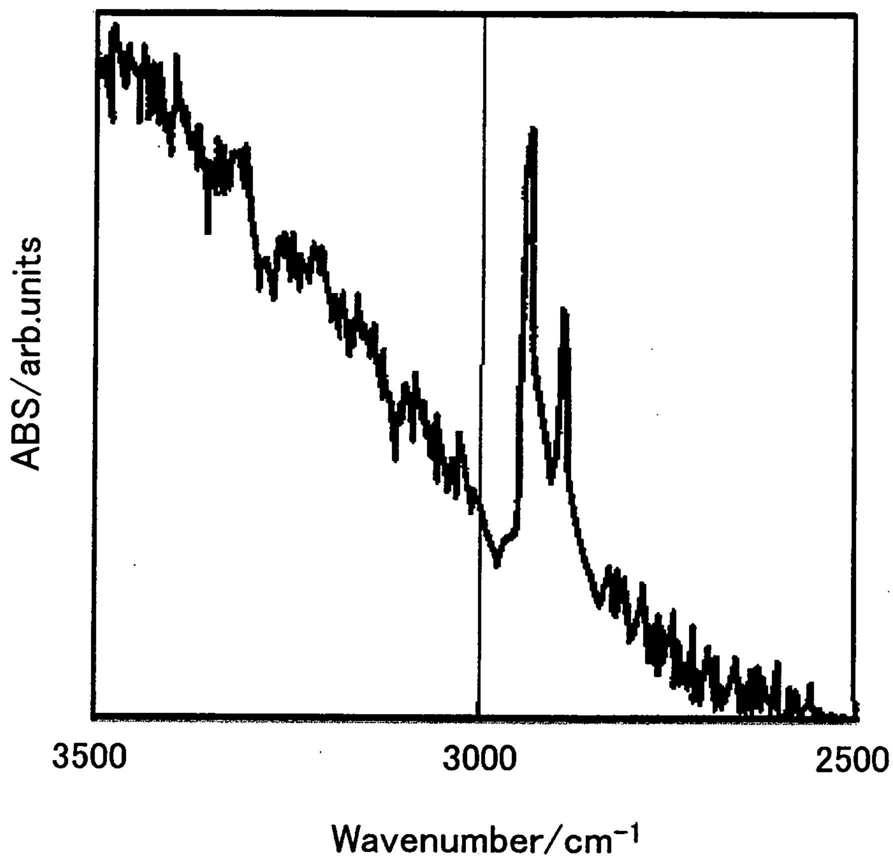

FIG. 13

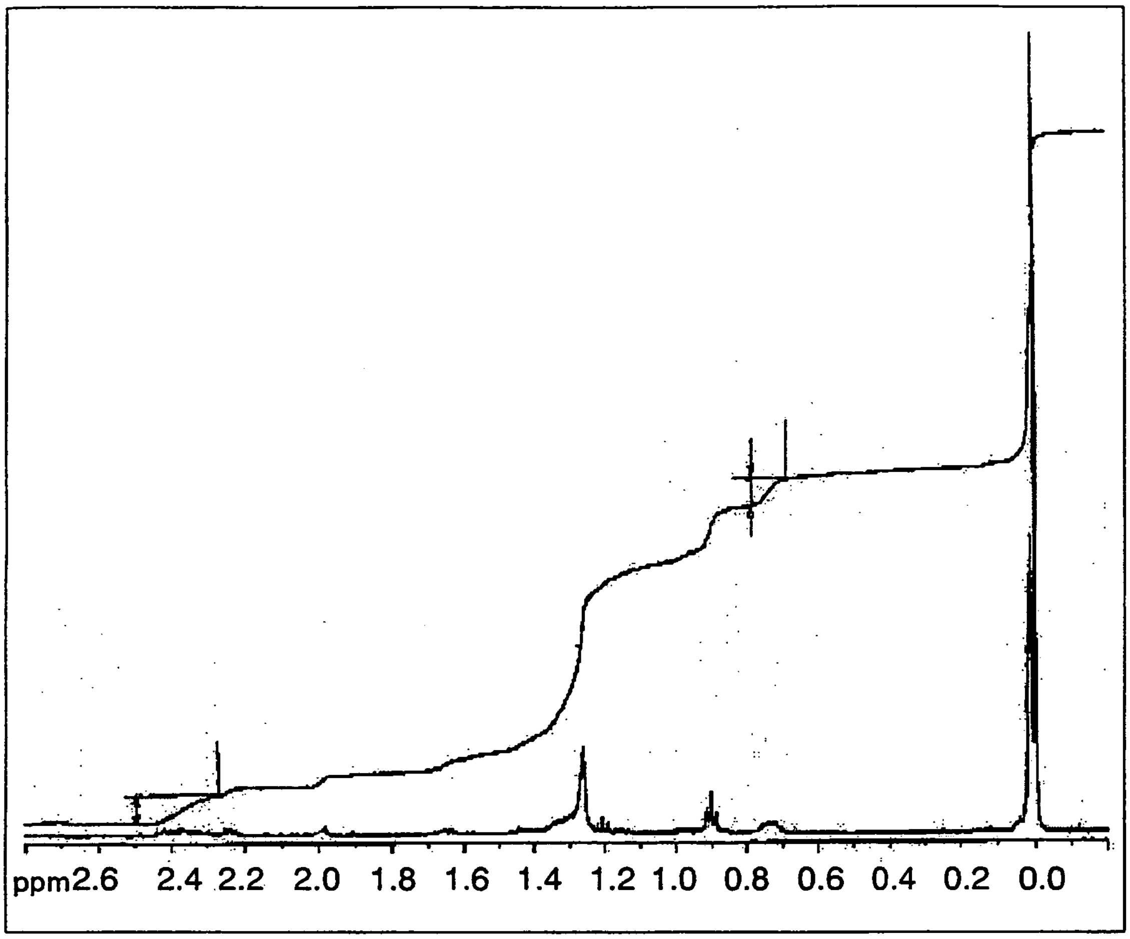

FIG. 14

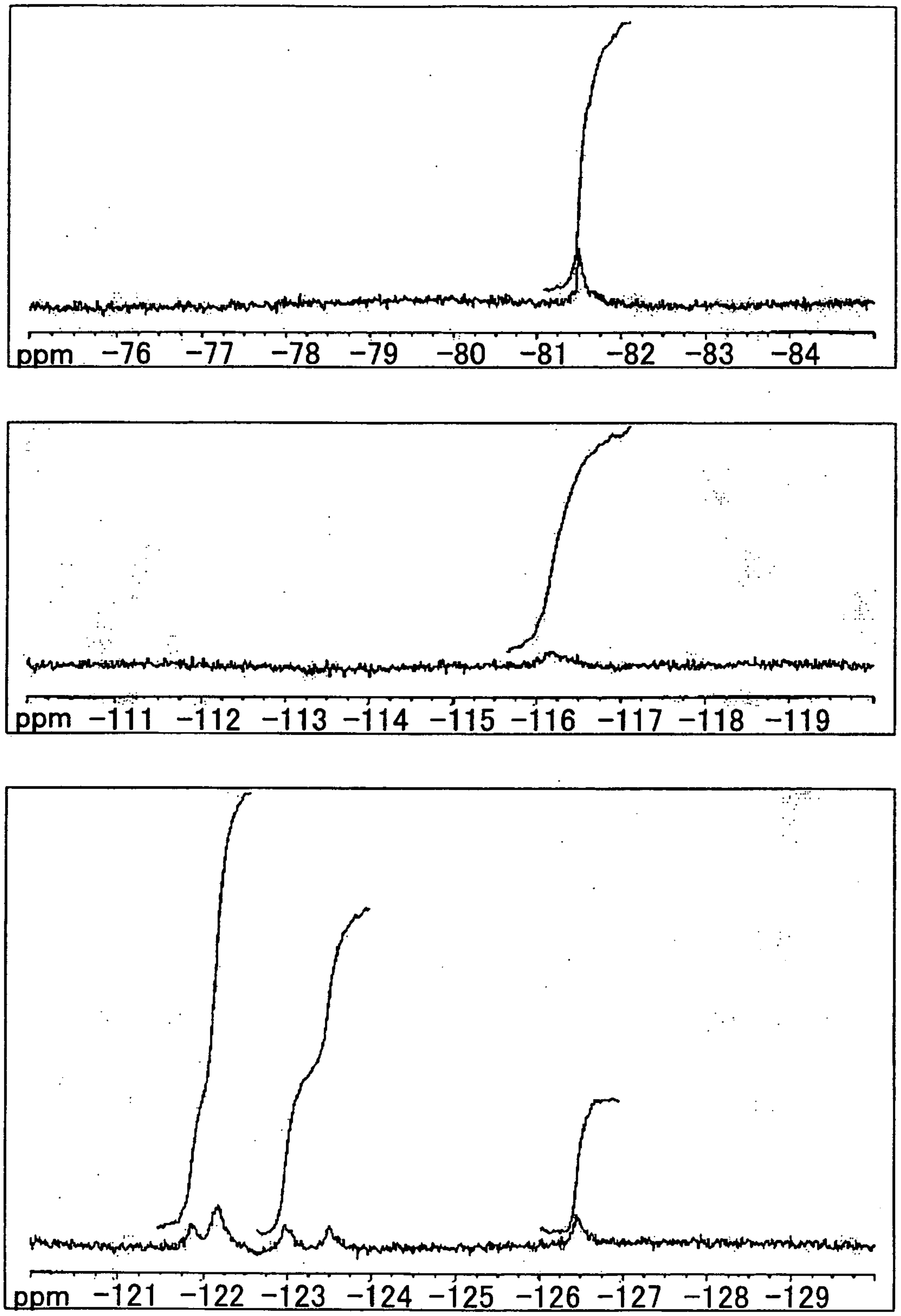
ppm -76 -77 -78 -79 -80 -81 -82 -83 -84
ppm -111 -112 -113 -114 -115 -116 -117 -118 -119
ppm -121 -122 -123 -124 -125 -126 -127 -128 -129

FIG. 15

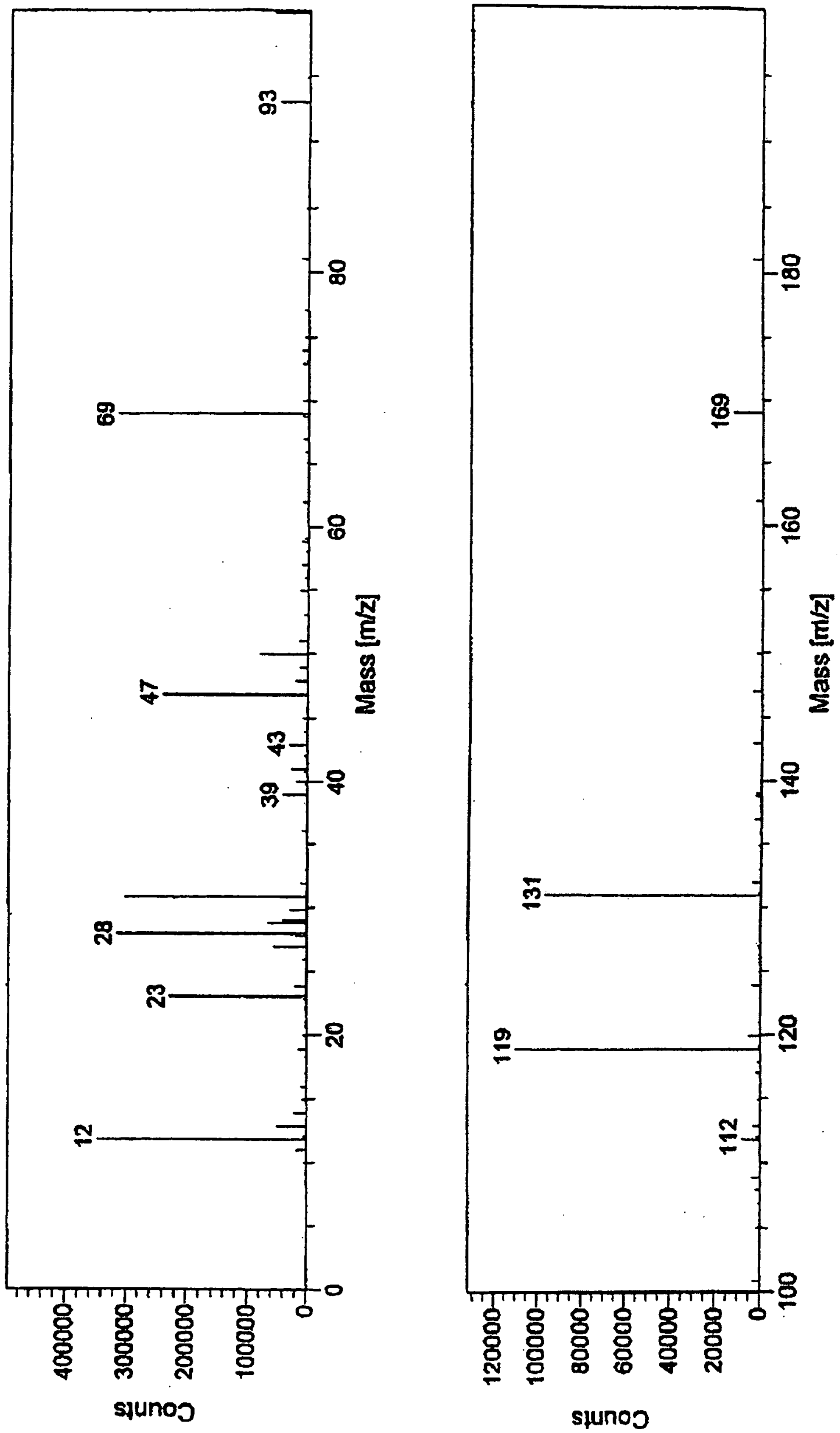
Counts
400000
300000
200000
100000
0
0
20
40
60
80
Mass [m/z]
12
23
28
39
43
47
69
93
Counts
120000
100000
80000
60000
40000
20000
0
100
120
140
160
180
Mass [m/z]
112
119
131
169

FIG. 16

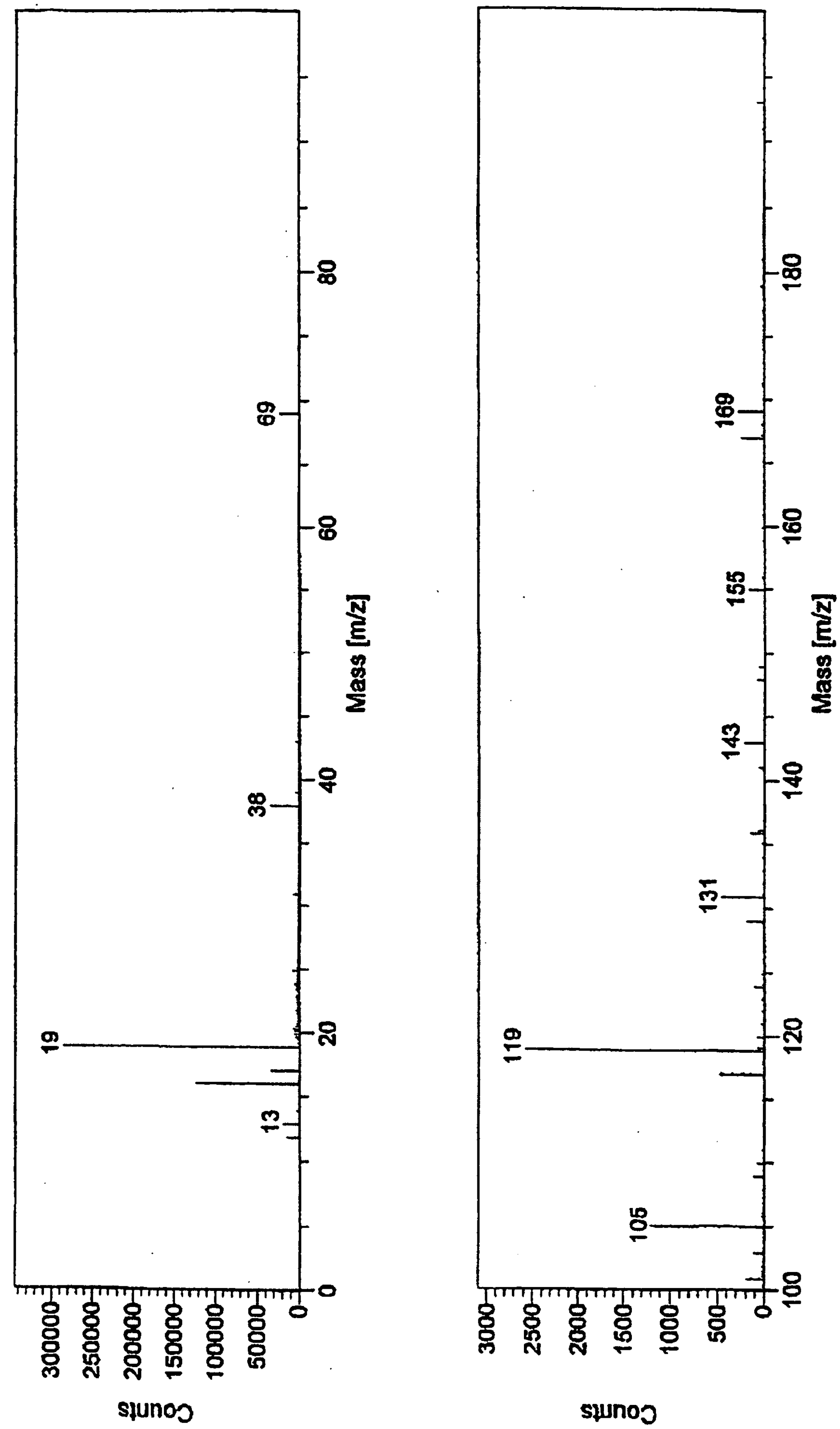

Counts
300000
250000
200000
150000
100000
50000
0
0
20
40
60
80
13
19
38
69
Mass [m/z]
Counts
3000
2500
2000
1500
1000
500
0
100
120
140
160
180
105
119
131
143
155
169
Mass [m/z]

FIG. 17

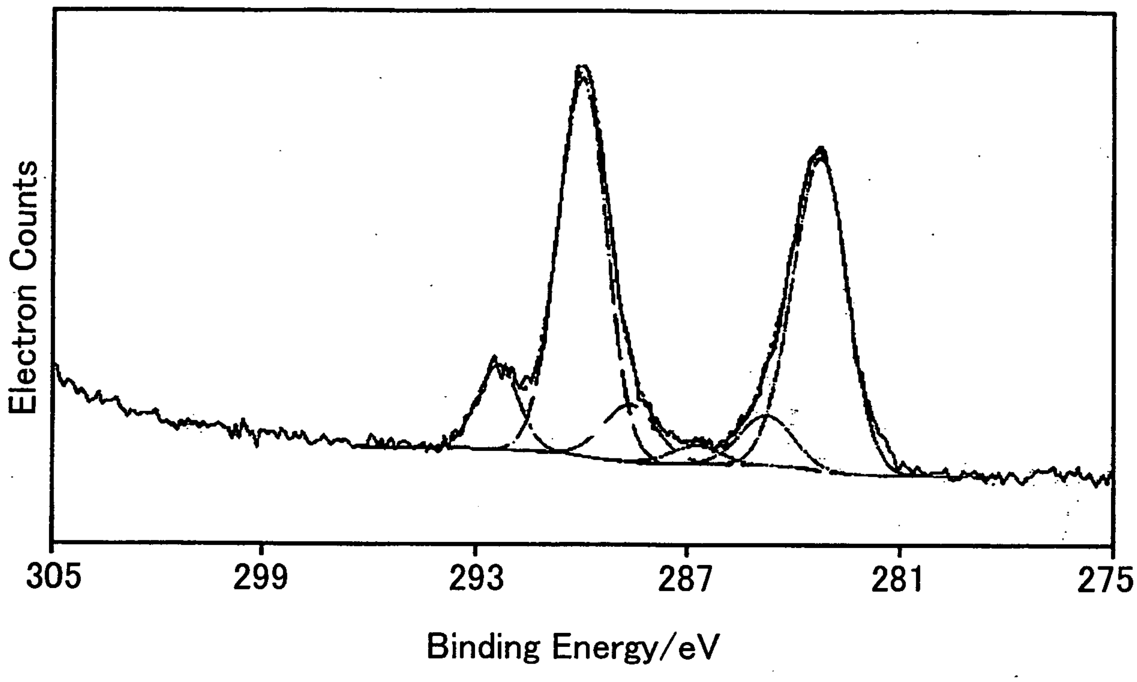

FIG. 18